# EUROPEAN PATENT APPLICATION

(11) **EP 4 852 528 A1**
(43) Date of publication of application: **09.12.2026**
(21) Application number: 24926673.5
(22) Date of filing: 28.08.2024
(51) Int. Cl.: H04W 52/02

(54) **WIRELESS FIDELITY SCANNING METHOD AND APPARATUS, AND DEVICE AND STORAGE MEDIUM**

(30) Priority: 29.02.2024 CN 202410231675
(71) Applicant: HUAWEI TECHNOLOGIES CO., LTD., Shenzhen, Guangdong 518129 (CN)
(72) Inventor: LI, Bing, Shenzhen, Guangdong 518129 (CN); DUAN, Qian, Shenzhen, Guangdong 518129 (CN); FANG, Shuailei, Shenzhen, Guangdong 518129 (CN); ZHANG, Wei, Shenzhen, Guangdong 518129 (CN)
(74) Representative: Huawei European IPR
(86) International application number: PCT/CN2024/115093
(87) International publication number: WO 2025/179806

(57) **Abstract**

The present invention discloses a wireless fidelity scanning method, an apparatus, a device, and a storage medium, to reduce power consumption of Wi-Fi scanning while increasing a hit rate of Wi-Fi scanning. In this application, matching identifier information is constructed in advance based on information such as a historical camped cell identifier and a historical neighboring cell identifier of a terminal device. The terminal device determines, based on a real-time camped cell identifier and a neighboring cell identifier, a similarity between the identifiers and the matching identifier information, and determines, based on the similarity, whether to perform Wi-Fi scanning. In this application, Wi-Fi scanning is performed when a similarity between first target information and the matching identifier information is greater than or equal to a preset similarity threshold, and Wi-Fi scanning is not performed when the similarity between the first target information and the matching identifier information is less than the preset similarity threshold, thereby reducing power consumption caused by unnecessary Wi-Fi scanning.

## Description

This application claims priority to Chinese Patent Application No. 202410231675.0, filed with the China National Intellectual Property Administration on February 29, 2024 and entitled "WIRELESS FIDELITY SCANNING METHOD, APPARATUS, DEVICE, AND STORAGE MEDIUM", which is incorporated herein by reference in its entirety.

### TECHNICAL FIELD

The present invention relates to the field of terminal technologies, and in particular, to a wireless fidelity scanning method, an apparatus, a device, and a storage medium.

### BACKGROUND

An electronic device has a wireless fidelity (Wireless Fidelity, Wi-Fi) function and a mobile network function. For example, a wearable device supports both Wi-Fi and a 4G network or a 5G network. As more functions are added to a terminal device, power consumption increases accordingly. How to reduce power consumption while maintaining a plurality of functions of the electronic device is a problem to be resolved.

### SUMMARY

An objective of the present invention is to provide a wireless fidelity scanning method, an apparatus, a device, and a storage medium, to resolve a technical problem in a conventional technology.

According to a first aspect, an embodiment of this application provides a wireless fidelity scanning method, applied to a terminal device, and the method includes:
obtaining first target information, where the first target information includes a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and determining, based on a similarity between the first target information and matching identifier information, whether to perform Wi-Fi scanning, where the matching identifier information includes a historical camped cell identifier and a historical neighboring cell identifier, the historical camped cell identifier is a cell identifier of a camped cell to which the electronic device was previously connected, and the historical neighboring cell identifier is a cell identifier of a neighboring cell corresponding to the camped cell to which the electronic device was previously connected.

In this application, Wi-Fi scanning is performed when the similarity between the first target information and the matching identifier information is greater than or equal to a preset similarity threshold, and Wi-Fi scanning is not performed when the similarity between the first target information and the matching identifier information is less than a preset similarity threshold, thereby reducing power consumption caused by unnecessary Wi-Fi scanning.

In some possible embodiments, the obtaining the first target information includes: obtaining the first target information in response to detecting that a first period is reached; or obtaining the first target information in response to detecting that screen-off duration reaches a second period; or obtaining the first target information in response to detecting that screen-on duration reaches a third period; or obtaining the first target information in response to detecting that the electronic device switches from screen-off to screen-on; or obtaining the first target information in response to detecting that a geofencing function is disabled; or obtaining the first target information in response to detecting that the electronic device is restarted; or obtaining the first target information in response to detecting that a wake-up event occurs in the electronic device.

In this application, different methods for obtaining the first target information are provided, so that the wireless fidelity scanning method in this application may cover most scenarios with a wireless fidelity scanning requirement, thereby making this application more universal.

In some possible embodiments, before the obtaining the first target information, the method further includes: determining that a distance between a location of the electronic device and a first location is greater than a preset distance, where the first location is a location at which the electronic device last performed Wi-Fi scanning.

In this application, locations obtained during two Wi-Fi are compared, to avoid power consumption caused by performing Wi-Fi scanning when the electronic device is not located within a Wi-Fi coverage area.

In some possible embodiments, after it is detected that a wake-up event occurs in the electronic device, before the first target information is obtained, the method further includes: determining that a time interval between a time at which the wake-up event occurs and a first wake-up time is longer than a preset time interval, where the first wake-up time is a time at which a wake-up event last occurred in the electronic device.

In this application, a time interval between two wake-ups is detected, to avoid power consumption wasted by frequent Wi-Fi scanning under frequent wake-ups.

In some possible embodiments, the obtaining the first target information includes: obtaining the first target information in response to switching from screen-off to screen-on caused by a user operation.

In this application, the first target information is obtained when screen-on is triggered by a user, thereby avoiding power consumption caused by performing Wi-Fi scanning when the user does not have a Wi-Fi connection requirement.

In some possible embodiments, the similarity between the first target information and the matching identifier information is determined by using the following method: if the matching identifier information includes the camped cell identifier in the first target information, determining that the similarity is a first preset value; or if the matching identifier information does not include the camped cell identifier in the first target information, determining that the similarity is a second preset value, where the first preset value is greater than a preset similarity threshold, and the second preset value is less than the preset similarity threshold.

In this application, if the camped cell identifier in the first target information is detected in the matching identifier information, it is determined that the similarity between the first target information and the matching identifier information is greater than the preset similarity threshold. The method is computationally simple and easy to implement.

In some possible embodiments, the similarity between the first target information and the matching identifier information is determined by using the following method: if the matching identifier information includes any one of the camped cell identifier or the neighboring cell identifier in the first target information, determining that the similarity is a first preset value; or if the matching identifier information does not include the camped cell identifier and the neighboring cell identifier in the first target information, determining that the similarity is a second preset value, where the first preset value is greater than a preset similarity threshold, and the second preset value is less than the preset similarity threshold.

In this application, if the camped cellid in the first target information is detected in the camped cellid in the matching identifier information, or any one of the neighboring cellids in the first target information is detected in the neighboring cellid in the matching identifier information, it is determined that the similarity between the first target information and the matching identifier information is greater than the preset similarity threshold. The method is computationally simple and easy to implement.

In some possible embodiments, the similarity between the first target information and the matching identifier information is determined by using the following method: retrieving a target entry from the matching identifier information based on the camped cell identifier, where the matching identifier information includes at least one entry, and each entry includes a camped cell identifier and at least one neighboring cell identifier; determining a quantity of same cell identifiers shared between the first target information and the target entry; determining a total quantity of cell identifiers in the first target information and the target entry; and using a ratio of the quantity of the same cell identifiers to the total quantity as the similarity.

In this application, the similarity may be determined by using a method for calculating the quantity of the same cell identifiers, and the similarity determined by using this method is more accurate.

In some possible embodiments, after the determining, based on the similarity between the first target information and the matching identifier information, whether to perform Wi-Fi scanning, the method further includes: when determining, based on the similarity between the first target information and the matching identifier information, to perform Wi-Fi scanning, determining target Wi-Fi information corresponding to the first target information in the matching identifier information; and connecting to Wi-Fi corresponding to the target Wi-Fi information.

In this application, when a Wi-Fi connection is established, the Wi-Fi may be specifically scanned based on the target Wi-Fi information, thereby further reducing power consumption during Wi-Fi scanning.

In some possible embodiments, before the determining, based on the similarity between the first target information and the matching identifier information, to perform Wi-Fi scanning, the method further includes: obtaining a quantity of scanning times of Wi-Fi scanning that has been performed, and obtaining scanning duration; obtaining a current time and a time at which Wi-Fi scanning was last performed; determining first duration based on the current time and the time at which Wi-Fi scanning was last performed; and determining that the first duration is not less than the scanning duration.

In this application, to avoid frequent Wi-Fi scanning, duration between two Wi-Fi scans needs to be determined before Wi-Fi scanning is performed, and Wi-Fi scanning is performed only when the duration meets a condition.

In some possible embodiments, after the determining that the first duration is not less than the scanning duration, the method further includes: updating the quantity of scanning times.

In this application, after Wi-Fi scanning is successfully performed, to ensure that an accurate quantity of scanning times can be obtained when this procedure is executed next time, the quantity of scanning times needs to be updated.

In some possible embodiments, the obtaining the scanning duration includes: obtaining preset scanning duration; or obtaining scanning duration determined based on the quantity of scanning times.

The scanning duration in this application may be set to a fixed value, or may be set to a function associated with the quantity of scanning times, thereby making the Wi-Fi scanning method provided in this application more universal.

In some possible embodiments, the method further includes: if the first target information is not obtained, performing Wi-Fi scanning.

In this application, Wi-Fi scanning is also performed if the first target information is not obtained, thereby further ensuring that a Wi-Fi connection can be established in a timely manner.

In some possible embodiments, the method further includes: obtaining second target information when the electronic device is in a Wi-Fi connected state, where the second target information includes a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and updating the matching identifier information based on the second target information.

In this application, to ensure accuracy and time validity of the matching identifier information, the matching identifier information is updated based on the obtained second target information. In this application, the matching identifier information is updated when a Wi-Fi connection is established, thereby further reducing consumption of mobile network resources.

In some possible embodiments, before the updating the matching identifier information based on the second target information, the method further includes: determining whether the camped cell identifier in the second target information exists in a camped cell identifier in the matching identifier information; and the updating the matching identifier information based on the second target information includes: if the camped cell identifier in the second target information does not exist in the camped cell identifier in the matching identifier information, updating the matching identifier information based on the second target information.

In this application, duplicate entries in the matching identifier information are avoided through comparison of camped cell identifier information, thereby reducing memory consumption of the electronic device.

In some possible embodiments, the method further includes: if the camped cell identifier in the second target information exists in the camped cell identifier in the matching identifier information, determining whether the neighboring cell identifier in the second target information is included in a neighboring cell identifier corresponding to a target row, where the target row is a row in the matching identifier information that is the same as the camped cell identifier in the second target information; or if the neighboring cell identifier in the second target information is not included in the neighboring cell identifier corresponding to the target row, updating the matching identifier information based on the second target information, or updating the matching identifier information based on a target neighboring cell identifier, where the target neighboring cell identifier is a neighboring cell identifier that is in the second target information and that is not included in the neighboring cell identifier corresponding to the target row.

In this application, when the camped cell identifiers are the same, the neighboring cell identifiers are further compared, thereby further avoiding duplicate entries in the matching identifier information, and reducing memory consumption of the electronic device.

In some possible embodiments, the updating the matching identifier information based on the target neighboring cell identifier includes: adding the target neighboring cell identifier to the neighboring cell identifier corresponding to the target row.

In this application, the target neighboring cell identifier is added to the neighboring cell identifier corresponding to the target row, and no new entries need to be added to the matching identifier information, thereby reducing memory consumption.

In some possible embodiments, the method further includes: if the neighboring cell identifier in the second target information is included in the neighboring cell identifier corresponding to the target row, determining whether Wi-Fi information corresponding to the camped cell identifier in Wi-Fi information in the matching identifier information is the same as obtained Wi-Fi information; or if the Wi-Fi information corresponding to the camped cell identifier in the Wi-Fi information in the matching identifier information is different from the obtained Wi-Fi information, updating the matching identifier information based on the second target information.

In this application, to ensure accuracy of the matching identifier information, the matching identifier information needs to be updated when the Wi-Fi information corresponding to the camped cell identifier in the Wi-Fi information in the matching identifier information is different from the obtained Wi-Fi information.

In some possible embodiments, the method further includes: if the Wi-Fi information corresponding to the camped cell identifier in the Wi-Fi information in the matching identifier information is the same as the obtained Wi-Fi information, obtaining a current time, and updating, by using the current time, a latest valid time corresponding to the camped cell identifier stored in the matching identifier information.

In this application, the latest valid time is updated, so that the matching identifier information has higher timeliness.

In some possible embodiments, the updating the matching identifier information based on the second target information includes: constructing a target entry based on the second target information; and inserting the target entry into the matching identifier information.

In this application, the matching identifier information is updated by inserting an entry, so that the matching identifier information is more comprehensive.

In some possible embodiments, the matching identifier information includes at least one entry, each entry includes a latest valid time, and the method further includes: obtaining a current time, and obtaining each latest valid time in the matching identifier information; determining a time difference between each latest valid time and the current time; and removing, from the matching identifier information, an entry that corresponds to a latest valid time having a time difference greater than a preset time difference value.

In this application, an entry that is not used for a long time is removed, so that memory consumption is reduced.

In some possible embodiments, if it is determined that the electronic device is in the Wi-Fi connected state, after a first target event is detected, the method further includes: if the second target information is not obtained, updating the matching identifier information based on preset target information and obtained Wi-Fi information.

In this application, when the second target information is not obtained, the matching identifier information is updated based on the preset target information, so that the matching identifier information is more comprehensive.

According to a second aspect, an embodiment of this application further provides a wireless fidelity scanning apparatus, applied to an electronic device, and the apparatus includes:
a first target information obtaining module, configured to obtain first target information, where the first target information includes a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and
a scanning module, configured to determine, based on a similarity between the first target information and matching identifier information, whether to perform Wi-Fi scanning, where the matching identifier information includes a historical camped cell identifier and a historical neighboring cell identifier, the historical camped cell identifier is a cell identifier of a camped cell to which the electronic device was previously connected, and the historical neighboring cell identifier is a cell identifier of a neighboring cell corresponding to the camped cell to which the electronic device was previously connected.

In some possible embodiments, the first target information obtaining module is specifically configured to: obtain the first target information in response to detecting that a first period is reached; or obtain the first target information in response to detecting that screen-off duration reaches a second period; or obtain the first target information in response to detecting that screen-on duration reaches a third period; or obtain the first target information in response to detecting that the electronic device switches from screen-off to screen-on; or obtain the first target information in response to detecting that a geofencing function is disabled; or obtain the first target information in response to detecting that the electronic device is restarted; or obtain the first target information in response to detecting that a wake-up event occurs in the electronic device.

In some possible embodiments, before obtaining the first target information, the first target information obtaining module is further configured to determine that a distance between a location of the electronic device and a first location is greater than a preset distance, where the first location is a location at which the electronic device last performed Wi-Fi scanning.

In some possible embodiments, after detecting that the wake-up event occurs in the electronic device, the first target information obtaining module is further configured to determine that a time interval between a time at which the wake-up event occurs and a first wake-up time is longer than a preset time interval, where the first wake-up time is a time at which a wake-up event last occurred in the electronic device.

In some possible embodiments, the first target information obtaining module is configured to obtain the first target information in response to switching from screen-off to screen-on caused by a user operation.

In some possible embodiments, the scanning module is specifically configured to: if the matching identifier information includes the camped cell identifier in the first target information, determine that the similarity is a first preset value; or if the matching identifier information does not include the camped cell identifier in the first target information, determine that the similarity is a second preset value, where the first preset value is greater than a preset similarity threshold, and the second preset value is less than the preset similarity threshold.

In some possible embodiments, the scanning module is specifically configured to: if the matching identifier information includes any one of the camped cell identifier or the neighboring cell identifier in the first target information, determine that the similarity is a first preset value; or if the matching identifier information does not include the camped cell identifier and the neighboring cell identifier in the first target information, determine that the similarity is a second preset value, where the first preset value is greater than a preset similarity threshold, and the second preset value is less than the preset similarity threshold.

In some possible embodiments, the scanning module is specifically configured to: retrieve a target entry from the matching identifier information based on the camped cell identifier, where the matching identifier information includes at least one entry, and each entry includes a camped cell identifier and at least one neighboring cell identifier; determine a quantity of same cell identifiers shared between the first target information and the target entry; determine a total quantity of cell identifiers in the first target information and the target entry; and use a ratio of the quantity of the same cell identifiers to the total quantity as the similarity.

In some possible embodiments, after determining, based on the similarity between the first target information and the matching identifier information, whether to perform Wi-Fi scanning, the scanning module is further configured to: when determining, based on the similarity between the first target information and the matching identifier information, to perform Wi-Fi scanning, determine target Wi-Fi information corresponding to the first target information in the matching identifier information; and connect to Wi-Fi corresponding to the target Wi-Fi information.

In some possible embodiments, before determining, based on the similarity between the first target information and the matching identifier information, to perform Wi-Fi scanning, the scanning module is further configured to: obtain a quantity of scanning times of Wi-Fi scanning that has been performed, and obtain scanning duration; obtain a current time and a time at which Wi-Fi scanning was last performed; determine first duration based on the current time and the time at which Wi-Fi scanning was last performed; and determine that the first duration is not less than the scanning duration.

In some possible embodiments, after determining that the first duration is not less than the scanning duration, the scanning module is further configured to update the quantity of scanning times.

In some possible embodiments, the scanning module is specifically configured to: obtain preset scanning duration; or obtain scanning duration determined based on the quantity of scanning times.

In some possible embodiments, the scanning module is further configured to: when the first target information is not obtained, perform Wi-Fi scanning.

In some possible embodiments, the scanning module is further configured to: when the electronic device is in a Wi-Fi connected state, obtain second target information, where the second target information includes a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and update the matching identifier information based on the second target information.

In some possible embodiments, before updating the matching identifier information based on the second target information, the scanning module is further configured to: determine whether the camped cell identifier in the second target information exists in the camped cell identifier in the matching identifier information; and the updating the matching identifier information based on the second target information includes: if the camped cell identifier in the second target information does not exist in the camped cell identifier in the matching identifier information, updating the matching identifier information based on the second target information.

In some possible embodiments, the scanning module is further configured to: if the camped cell identifier in the second target information exists in the camped cell identifier in the matching identifier information, determine whether the neighboring cell identifier in the second target information is included in a neighboring cell identifier corresponding to a target row, where the target row is a row in the matching identifier information that is the same as the camped cell identifier in the second target information; or if the neighboring cell identifier in the second target information is not included in the neighboring cell identifier corresponding to the target row, update the matching identifier information based on the second target information, or update the matching identifier information based on a target neighboring cell identifier, where the target neighboring cell identifier is a neighboring cell identifier that is in the second target information and that is not included in the neighboring cell identifier corresponding to the target row.

In some possible embodiments, when updating the matching identifier information based on the target neighboring cell identifier, the scanning module is specifically configured to: if the neighboring cell identifier in the second target information is included in the neighboring cell identifier corresponding to the target row, determine whether Wi-Fi information corresponding to the camped cell identifier in Wi-Fi information in the matching identifier information is the same as obtained Wi-Fi information. If the Wi-Fi information corresponding to the camped cell identifier in the Wi-Fi information in the matching identifier information is different from the obtained Wi-Fi information, update the matching identifier information based on the second target information.

In some possible embodiments, the scanning module is further configured to: if the Wi-Fi information corresponding to the camped cell identifier in the Wi-Fi information in the matching identifier information is the same as the obtained Wi-Fi information, obtain a current time, and update, by using the current time, a latest valid time corresponding to the camped cell identifier stored in the matching identifier information.

In some possible embodiments, the scanning module is specifically configured to: construct a target entry based on the second target information; and insert the target entry into the matching identifier information.

In some possible embodiments, the matching identifier information includes at least one entry, and each entry includes the latest valid time. The scanning module is further configured to: obtain the current time, and obtain each latest valid time in the matching identifier information; determine a time difference between each latest valid time and the current time; and remove, from the matching identifier information, an entry that corresponds to a latest valid time having a time difference greater than a preset time difference value.

In some possible embodiments, if it is determined that the electronic device is in the Wi-Fi connected state, after a first target event is detected, the scanning module is further configured to: if the second target information is not obtained, update the matching identifier information based on preset target information and obtained Wi-Fi information.

According to a third aspect, another embodiment of this application further provides an electronic device, including at least one processor and a memory communicatively connected to the at least one processor, where the memory stores an instruction that can be executed by the at least one processor, and the instruction is executed by the at least one processor, so that the at least one processor can perform any one of the methods provided in embodiments of the first aspect of this application.

According to a fourth aspect, another embodiment of this application further provides a computer-readable storage medium, where the computer-readable storage medium stores a computer program, and the computer program is used to enable a computer to perform any one of the methods provided in embodiments of the first aspect of this application.

Additional features and advantages of this application will be set forth in the specification that follows, and in part will be obvious from the specification, or be learned by practice of the application. Objectives and additional advantages of this application may be implemented and obtained by using structures specially specified in the written specification, claims, and accompanying drawings.

### BRIEF DESCRIPTION OF DRAWINGS

FIG. 1 is a diagram of matching identifier information that includes a camped cellid and a neighboring cellid and is stored in a form of an information table in a wireless fidelity scanning method according to an embodiment of this application;
FIG. 2 is a diagram of matching identifier information that includes a camped cellid, a neighboring cellid, and a latest valid time and is stored in a form of an information table in a wireless fidelity scanning method according to an embodiment of this application;
FIG. 3 is a diagram of matching identifier information that includes a camped cellid, a neighboring cellid, and Wi-Fi information and is stored in a form of an information table in a wireless fidelity scanning method according to an embodiment of this application;
FIG. 4 is a diagram of matching identifier information that includes a camped cellid, a neighboring cellid, a latest valid time, and Wi-Fi information and is stored in a form of an information table in a wireless fidelity scanning method according to an embodiment of this application;
FIG. 5 is a diagram of a target entry in a wireless fidelity scanning method according to an embodiment of this application;
FIG. 6 is a diagram of an information table updated based on the target entry shown in FIG. 5 in a wireless fidelity scanning method according to an embodiment of this application;
FIG. 7 is another diagram of a target entry in a wireless fidelity scanning method according to an embodiment of this application;
FIG. 8 is a diagram of an information table updated based on the target entry shown in FIG. 7 in a wireless fidelity scanning method according to an embodiment of this application;
FIG. 9 is a diagram of an information table obtained after the information table shown in FIG. 8 is updated in a wireless fidelity scanning method according to an embodiment of this application;
FIG. 10 is another diagram of a target entry in a wireless fidelity scanning method according to an embodiment of this application;
FIG. 11 is a diagram of an information table obtained after the information table shown in FIG. 2 is updated based on the target entry shown in FIG. 10 in a wireless fidelity scanning method according to an embodiment of this application;
FIG. 12 is a diagram of a target entry constructed based on a camped cellid, a neighboring cellid, and a current time in a wireless fidelity scanning method according to an embodiment of this application;
FIG. 13 is a diagram of an information table obtained after the information table shown in FIG. 10 is updated based on the target entry shown in FIG. 12 in a wireless fidelity scanning method according to an embodiment of this application;
FIG. 14 is a diagram of an information table obtained after the information table shown in FIG. 13 is updated in a wireless fidelity scanning method according to an embodiment of this application;
FIG. 15 is another diagram of an information table obtained after the information table shown in FIG. 13 is updated in a wireless fidelity scanning method according to an embodiment of this application;
FIG. 16 is a diagram of a target entry constructed based on a camped cellid, a neighboring cellid, and Wi-Fi information in a wireless fidelity scanning method according to an embodiment of this application;
FIG. 17 is a diagram of an information table obtained after the information table shown in FIG. 3 is updated based on the target entry shown in FIG. 16 in a wireless fidelity scanning method according to an embodiment of this application;
FIG. 18 is a diagram of an information table obtained after the information table shown in FIG. 17 is updated in a wireless fidelity scanning method according to an embodiment of this application;
FIG. 19 is a diagram of an information table stored in an electronic device in a wireless fidelity scanning method according to an embodiment of this application;
FIG. 20 is a diagram of an information table obtained after the information table shown in FIG. 19 is updated in a wireless fidelity scanning method according to an embodiment of this application;
FIG. 21 is another diagram of an information table obtained after the information table shown in FIG. 19 is updated in a wireless fidelity scanning method according to an embodiment of this application;
FIG. 22 is a diagram of a target entry in a wireless fidelity scanning method according to an embodiment of this application;
FIG. 23 is a diagram of an information table obtained after the information table shown in FIG. 19 is updated based on the target entry shown in FIG. 24 in a wireless fidelity scanning method according to an embodiment of this application;
FIG. 24 is another diagram of a target entry in a wireless fidelity scanning method according to an embodiment of this application;
FIG. 25A is a diagram of an information table obtained after the information table shown in FIG. 19 is updated based on the target entry shown in FIG. 21 in a wireless fidelity scanning method according to an embodiment of this application;
FIG. 25B is a diagram of an information table obtained after Wi-Fi information and a latest valid time of the information table shown in FIG. 19 are updated in a wireless fidelity scanning method according to an embodiment of this application;
FIG. 26 is a diagram of an information table obtained after an entry is removed from the information table shown in FIG. 25 in a wireless fidelity scanning method according to an embodiment of this application;
FIG. 27 is a diagram of a target entry generated based on preset identifier information in a wireless fidelity scanning method according to an embodiment of this application;
FIG. 28 is a diagram of an information table obtained after the information table shown in FIG. 19 is updated based on the target entry shown in FIG. 27 in a wireless fidelity scanning method according to an embodiment of this application;
FIG. 29 is an overall schematic flowchart of a wireless fidelity scanning method according to an embodiment of this application;
FIG. 30 is a schematic flowchart of calculating a similarity in a wireless fidelity scanning method according to an embodiment of this application;
FIG. 31 is a schematic flowchart of determining whether to perform Wi-Fi scanning in a wireless fidelity scanning method according to an embodiment of this application;
FIG. 32 is a diagram of an information table in a wireless fidelity scanning method according to an embodiment of this application;
FIG. 33 is a diagram of an apparatus in a wireless fidelity scanning method according to an embodiment of this application; and
FIG. 34 is a diagram of an electronic device in a wireless fidelity scanning method according to an embodiment of this application.

### DESCRIPTION OF EMBODIMENTS

Embodiments described below with reference to the accompanying drawings are examples, and are intended to explain the present invention only, but should not be construed as a limitation on the present invention.

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Currently, many electronic devices provide Wi-Fi and mobile network functions. The Wi-Fi function is a manner of establishing a wireless connection with a network-enabled terminal device (for example, a router or an electronic device that enables a hotspot) to access the Internet via the terminal device. The mobile network function is a manner of accessing the Internet by connecting an electronic device to a public network using a wireless communication technology such as 4G or 5G.

When the Wi-Fi function of the electronic device is in an enabled state, the electronic device may perform Wi-Fi scanning to connect to a network.

In one example, the electronic device may use a periodic scanning method. For example, the electronic device performs scanning at intervals of 60s/120s/180s/240s/300s when the screen is off, or performs scanning at intervals of 10s/10s/10s/30s/30s/30s/60s when the screen is on. However, if a user is not located within a coverage area of a Wi-Fi hotspot, a hit rate of scanning is greatly reduced, affecting performance. In addition, excessive power consumption caused by Wi-Fi scanning is also incurred.

To balance a hit rate of Wi-Fi scanning and connection and reduce power consumption, in some other instances, an idea for controlling Wi-Fi scanning by using a cell identifier (cellid) is introduced. That is, a current camped cell identifier (cellid) of a terminal device is obtained, and it is determined whether the obtained camped cell identifier is consistent with a registered cell identifier. If the obtained camped cell identifier is consistent with the registered cell identifier, Wi-Fi scanning is performed. However, this method still has a problem that scanning is not performed in a timely manner. For example, a cell identifier registered by a user is cellidA. Due to various reasons, the user cannot obtain cellidA (for example, a base station with cellidA is faulty), but obtains cellidB. Because the user has not registered cellidB, a Wi-Fi scanning operation cannot be triggered based on cellidB. Alternatively, a cell identifier registered by a user is cellidA, and an obtained camped cellid is cellidB. Because the user has not registered cellidB, in this case, a Wi-Fi scanning operation cannot be triggered based on cellidB.

Therefore, embodiments of this application provide a wireless fidelity scanning method, an apparatus, a device, and a storage medium, to reduce power consumption of Wi-Fi scanning while increasing a hit rate of Wi-Fi scanning.

The wireless fidelity scanning method in this embodiment of this application may include: constructing matching identifier information in advance based on information such as a historical camped cell identifier and a historical neighboring cell identifier of a terminal device; determining, by the terminal device based on a real-time camped cell identifier and a neighboring cell identifier, a similarity between the identifiers and the matching identifier information; and determining, based on the similarity, whether to perform Wi-Fi scanning. In this application, Wi-Fi scanning is performed when the similarity between first target information and the matching identifier information is greater than or equal to a preset similarity threshold, and Wi-Fi scanning is not performed when the similarity between the first target information and the matching identifier information is less than a preset similarity threshold, thereby reducing power consumption caused by unnecessary Wi-Fi scanning.

In this application, the first target information includes the camped cellid and the neighboring cellid. Therefore, a problem that Wi-Fi scanning cannot be performed when a single base station fails is also avoided.

The wireless fidelity scanning method provided in this application is applicable to various terminal devices, including but not limited to electronic devices that have a wireless fidelity scanning requirement, such as a computer, a notebook computer, a smartphone, a tablet computer, a smart watch, a smart band, and an in-vehicle terminal.

For ease of understanding, the following describes in detail a wireless fidelity scanning method provided in this embodiment of this application with reference to the accompanying drawings.

In this embodiment of this application, to improve power consumption of Wi-Fi scanning and reduce consumption of network resources caused by frequent Wi-Fi scanning, matching identifier information is constructed, and Wi-Fi scanning is performed only when a similarity between obtained first target information and the matching identifier information is greater than or equal to a preset similarity threshold.

In some embodiments, the matching identifier information may include a historical camped cell identifier and a historical neighboring cell identifier. The historical camped cell identifier is a cell identifier of a camped cell that has been used (or connected to) by the electronic device, and the historical neighboring cell identifier is a cell identifier of a neighboring cell corresponding to the camped cell that has been used by the electronic device.

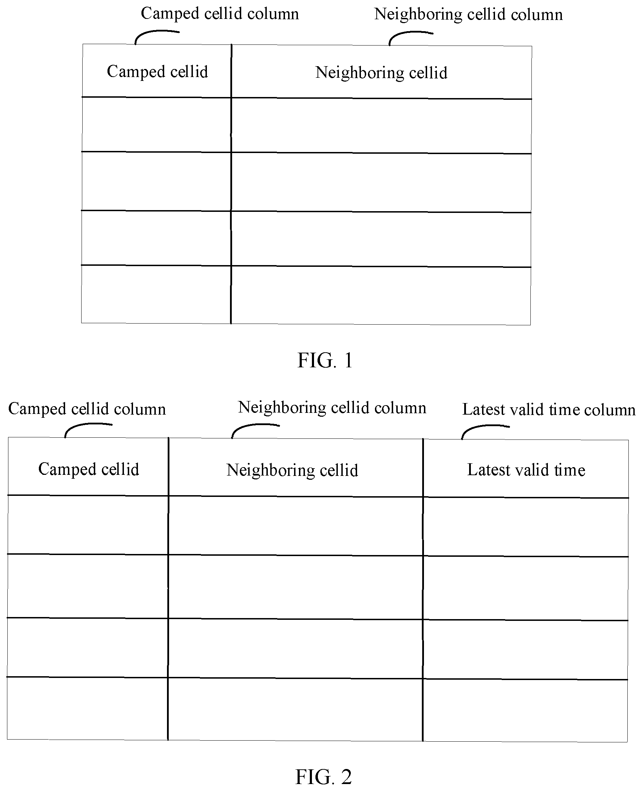

In some possible implementations, the matching identifier information may be stored in an electronic device in a form of an information table. For example, as shown in FIG. 1, a camped cellid column and a neighboring cellid column may be included. The camped cellid column stores a camped cell identifier corresponding to an electronic device, and the neighboring cellid column stores a neighboring cell identifier corresponding to the camped cell identifier corresponding to the electronic device.

In some other embodiments, the matching identifier information may further include Wi-Fi information and/or a latest valid time. The Wi-Fi information may be used to implement targeted scanning, and the latest valid time may be used to record a time at which this Wi-Fi was last used.

When the matching identifier information is stored in the form of the information table, the information table may further include a Wi-Fi information column and/or a latest valid time column, where the latest valid time column is used to store the foregoing latest valid time, as shown in FIG. 2, FIG. 3, and FIG. 4.

It should be learned that the Wi-Fi information in the information table may be a Wi-Fi name, a Wi-Fi binary identifier (Basic Service Set Identity Document, BSSID), or other information that can represent Wi-Fi. Because there may be duplicate Wi-Fi names, and a BSSID of Wi-Fi is unique, the BSSID may be used as the Wi-Fi information of the Wi-Fi during a specific implementation. It should be learned that a specific type of the Wi-Fi information is not limited in this application, and may be selected based on an implementation status.

To ensure accuracy of determining, based on the matching identifier information, whether Wi-Fi scanning needs to be performed, an electronic device may update the matching identifier information when using a Wi-Fi function. In some embodiments, to reduce network resources consumed during an update of the matching identifier information, the update of the matching identifier information may be triggered when a Wi-Fi connection is established.

In some possible embodiments, the matching identifier information stored in the electronic device may be updated in a periodic manner, or may be updated in an event-triggered manner, or may be updated by combining the foregoing two manners.

When the matching identifier information is updated in the periodic manner, an update period may be preset in the electronic device. When determining, based on the update period, that an update moment is reached, the electronic device triggers the update of the matching identifier information. For example, it is determined that the update period of the electronic device is 10 minutes, and a time at which the matching identifier information was last updated is 12:10. In this case, when it is determined that the time reaches 12:20, it is determined that the update moment of the electronic device is reached.

When the matching identifier information is updated in the event-triggered manner, the event that triggers the update of the matching identifier information may include at least one of the following: a Wi-Fi connection event, a screen-on event, a wake-up event, a cell identifier change event, and the like.

The Wi-Fi connection event refers to an operation of performing a Wi-Fi connection. It can be understood that the Wi-Fi connection event may be triggered by the electronic device, or may be manually triggered by a user.

The screen-on event means that the electronic device switches from screen-off to screen-on. The screen-on event may be manually triggered by a user, or may be caused when the electronic device displays a received message or notification. A manner of triggering the screen-on event is not limited in this application.

The wake-up event means that the electronic device enters a high power consumption state from a low power consumption state.

The cell identifier change event means that a camped cellid and/or a neighboring cellid of the electronic device change. For example, it is determined that the camped cellid is cellidA and the neighboring cellid is cellidB at 8:00. If the camped cellid changes at 8:05, for example, the camped cellid is cellidC and the neighboring cellid is cellidB, it is determined that the cell identifier change event is received. Alternatively, it is determined that the camped cellid is cellidA and the neighboring cellid is cellidB at 8:00. If the neighboring cellid changes at 8:05, for example, the camped cellid is cellidA and the neighboring cellids are cellidB and cellidC, it is determined that the cell identifier change event is received. Alternatively, it is determined that the camped cellid is cellidA and the neighboring cellid is cellidB at 8:00. If the neighboring cellid changes at 8:05, for example, the camped cellid is cellidC, and the neighboring cellids are cellidB and cellidD, it is determined that the cell identifier change event is received. It should be noted that when there are a plurality of neighboring cellids, that the neighboring cellids change may be that some neighboring cellids change, or may be that all the neighboring cellids change. This is not limited in this embodiment of this application.

The following uses an example in which matching identifier information includes a camped cellid and a neighboring cellid, and is stored in a form of an information table to describe an update of the matching identifier information.

When the information table is empty, that is, the information table does not have any records (entries), if a Wi-Fi connection event is received, the electronic device may obtain second target information (the camped cellid and the neighboring cellid), generate a target entry based on the second target information, and correspondingly store the target entry in the information table.

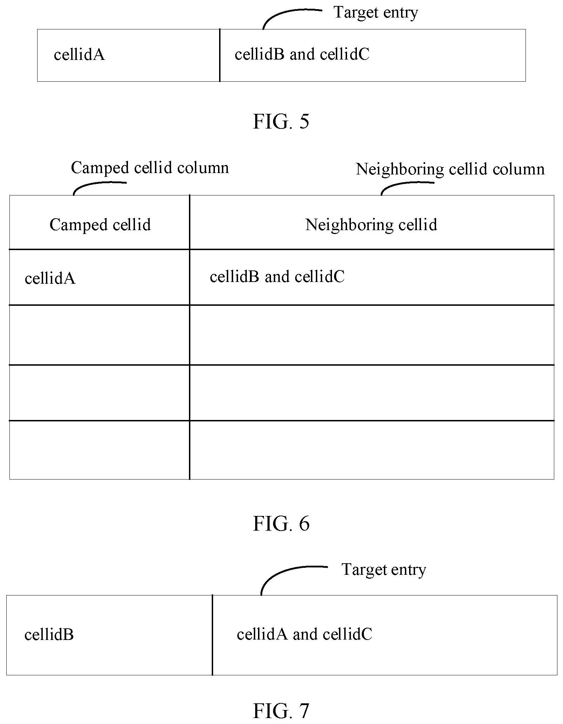

For example, a stored information table is shown in FIG. 1. It is determined that a Wi-Fi connection event is received, an obtained camped cellid is cellidA, and obtained neighboring cellids are cellidB and cellidC. In this case, a generated target entry is shown in FIG. 5. The target entry shown in FIG. 5 is inserted into the information table shown in FIG. 1, and an updated information table is obtained as shown in FIG. 6.

For example, if the electronic device determines to enter a high power consumption state from a low power consumption state, the electronic device may obtain the second target information, and then compare the second target information with information in the information table. The electronic device first checks the camped cellid, that is, to determine whether the camped cellid corresponding to the second target information exists in a camped cellid column in the information table. If the camped cellid corresponding to the second target information does not exist in the camped cellid column in the information table, a target entry needs to be constructed.

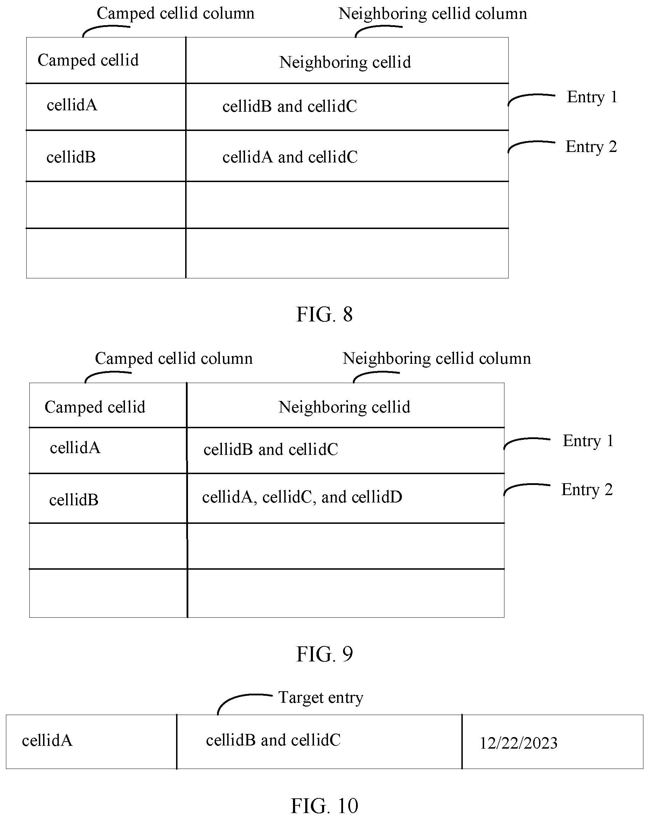

For example, a camped cellid obtained by the electronic device is cellidB, and obtained neighboring cellids are cellidA and cellidC, a constructed target entry is shown in FIG. 7, and an information table is shown in FIG. 6. In this case, an updated information table is shown in FIG. 8.

For example, if the electronic device enters screen-on from screen-off, the electronic device may obtain the second target information, then compare the second target information with information in the information table, and determine that the camped cellid corresponding to the second target information exists in the camped cellid column in the information table. In this case, a neighboring cellid column needs to be further compared. First, in the camped cellid column, a row in which the camped cellid is the same as the camped cellid corresponding to first target information is used as a target row. Whether the neighboring cellid column corresponding to the target row includes all neighboring cellids corresponding to the first target information is determined. If the neighboring cellid column corresponding to the target row includes all the neighboring cellids corresponding to the first target information, it indicates that in this case, the second target information obtained this time has been recorded in the information table, and consequently, the information table does not need to be updated. If it is determined that the neighboring cellid column corresponding to the target row does not include all the neighboring cellids corresponding to the first target information, a target neighboring cellid may be determined and then inserted into the neighboring cellid column corresponding to the target row.

For example, a camped cellid obtained by the electronic device is cellidB, obtained neighboring cellids are cellidA and cellidD, and an information table is shown in FIG. 8. In this case, the target entry is entry 2. It is determined, based on the entry 2 and the second target information, that the target neighboring cellid is cellidD, and cellidD is added to a neighboring cellid column of the entry 2. An updated information table is shown in FIG. 9.

The following uses an example in which matching identifier information includes a camped cellid, a neighboring cellid, and a latest valid time, and is stored in a form of an information table to describe an update of the matching identifier information.

When the information table is empty, that is, the information table does not have any records (entries), if a Wi-Fi connection event is received, the electronic device may obtain second target information (the camped cellid, the neighboring cellid, and the current time), generate a target entry based on the second target information, and correspondingly store the target entry in the information table.

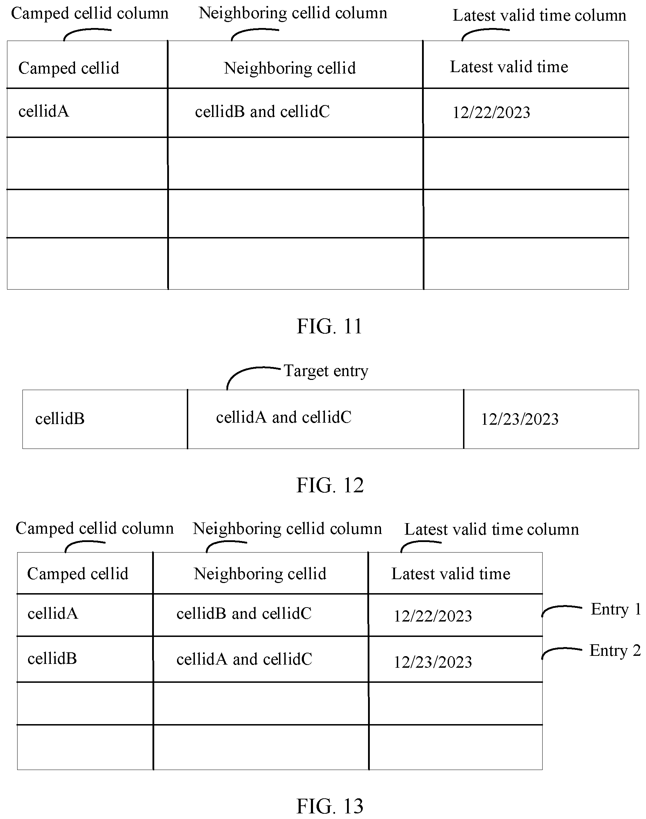

For example, a stored information table is shown in FIG. 2. It is determined that a Wi-Fi connection event is received, an obtained camped cellid is cellidA, obtained neighboring cellids are cellidB and cellidC, and the current time is 12/22/2023. In this case, a generated target entry is shown in FIG. 10. The target entry shown in FIG. 10 is inserted into the information table shown in FIG. 2, and an updated information table is obtained as shown in FIG. 11.

It should be learned that the foregoing 12/22/2023 indicates that the event is 12/22/2023. Although year, month, and day are used as an example for description in figures of this application, a format of an obtained current time is not limited in this application. In a specific implementation, only month and day may be obtained; alternatively, month, day, hour, and the like may be obtained.

For example, if the electronic device determines to enter a high power consumption state from a low power consumption state, the electronic device may obtain the second target information, and then compare the second target information with information in the information table. The electronic device first checks the camped cellid, that is, to determine whether the camped cellid corresponding to the second target information exists in a camped cellid column in the information table. If the camped cellid corresponding to the second target information does not exist in the camped cellid column in the information table, a target entry needs to be constructed.

For example, a camped cellid obtained by the electronic device is cellidB, obtained neighboring cellids are cellidA and cellidC, and a current time is 12/23/2023. A constructed target entry is shown in FIG. 12, and an information table is shown in FIG. 11. In this case, an updated information table is shown in FIG. 13.

For example, if the electronic device enters screen-on from screen-off, the electronic device may obtain the second target information, then compare the second target information with information in the information table, and determine that the camped cellid corresponding to the second target information exists in the camped cellid column in the information table. In this case, a neighboring cellid column needs to be further compared. First, in the camped cellid column, a row in which the camped cellid is the same as the camped cellid corresponding to first target information is used as a target row. Whether the neighboring cellid column corresponding to the target row includes all neighboring cellids corresponding to the first target information is determined. If the neighboring cellid column corresponding to the target row includes all the neighboring cellids corresponding to the first target information, it indicates that in this case, the second target information obtained this time has been recorded in the information table, and only the latest valid time needs to be updated. If it is determined that the neighboring cellid column corresponding to the target row does not include all the neighboring cellids corresponding to the first target information, a target neighboring cellid may be determined and then inserted into the neighboring cellid column corresponding to the target row.

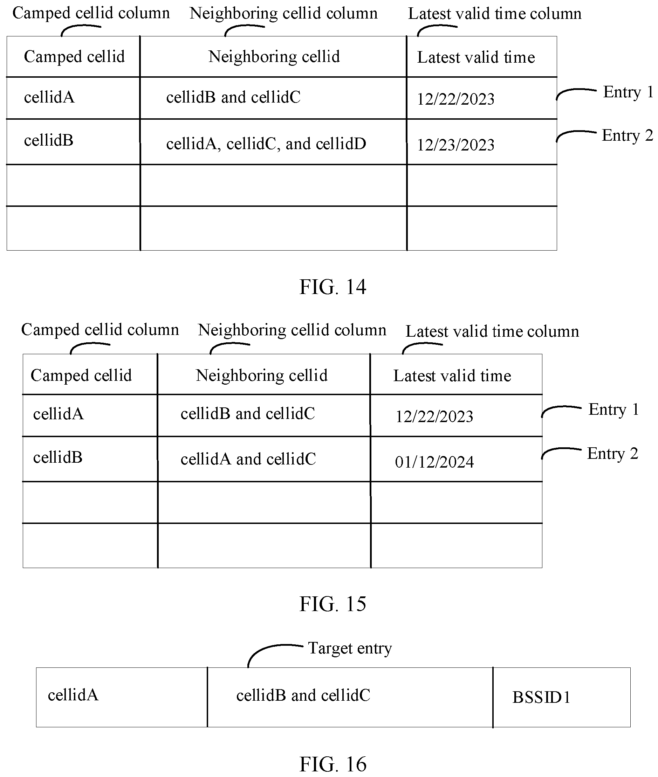

For example, a camped cellid obtained by the electronic device is cellidB, obtained neighboring cellids are cellidA and cellidD, and an information table is shown in FIG. 13. In this case, the target entry is entry 2. It is determined, based on the entry 2 and the second target information, that the target neighboring cellid is cellidD, and cellidD is added to a neighboring cellid column of the entry 2. An updated information table is shown in FIG. 14.

For example, a camped cellid obtained by the electronic device is cellidB, obtained neighboring cellids are cellidA and cellidC, a current time is 01/12/2024, and an information table is shown in FIG. 13. In this case, the target entry is entry 2. In this case, it is determined that the neighboring cellid of the entry 2 includes all the obtained neighboring cellids. In this case, only a latest valid time of the entry 2 needs to be updated, and an updated information table is shown in FIG. 15.

The following uses an example in which matching identifier information includes a camped cellid, a neighboring cellid, and Wi-Fi information, and is stored in a form of an information table to describe an update of the matching identifier information.

When the information table is empty, that is, the information table does not have any records (entries), if a Wi-Fi connection event is received, the electronic device may obtain second target information (the camped cellid, the neighboring cellid, and the Wi-Fi information), generate a target entry based on the second target information, and correspondingly store the target entry in the information table.

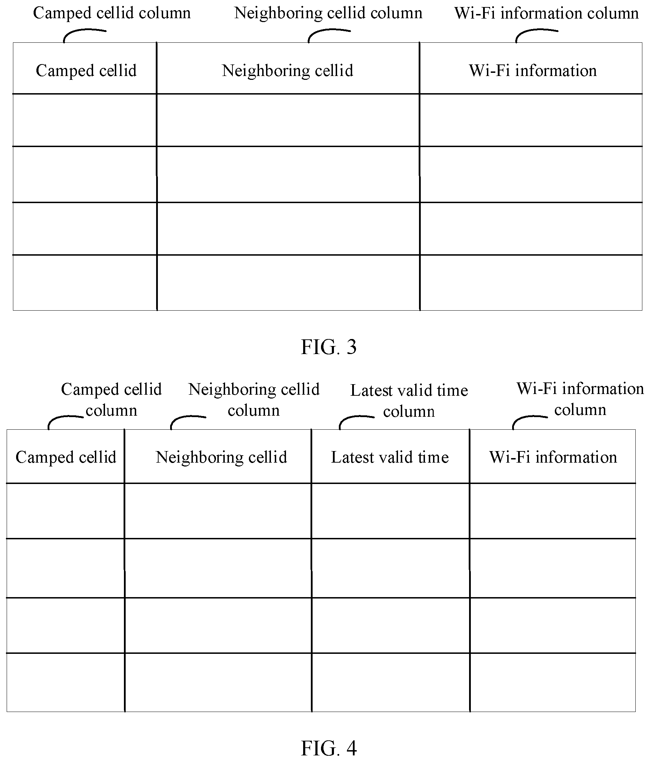

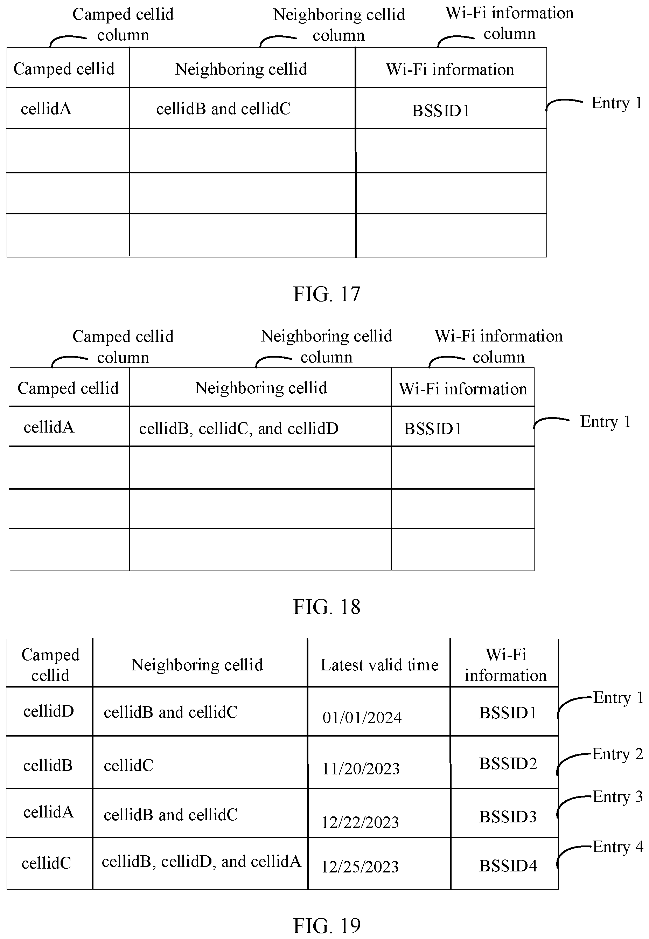

For example, a stored information table is shown in FIG. 3. It is determined that a Wi-Fi connection event is received, an obtained camped cellid is cellidA, obtained neighboring cellids are cellidB and cellidC, and Wi-Fi information is BSSID1. In this case, a generated target entry is shown in FIG. 16. The target entry shown in FIG. 16 is inserted into the information table shown in FIG. 3, and an updated information table is obtained as shown in FIG. 17.

For example, if the electronic device determines to enter a high power consumption state from a low power consumption state, the electronic device may obtain the second target information, and then compare the second target information with information in the information table. The electronic device first checks the camped cellid, that is, to determine whether the camped cellid corresponding to the second target information exists in a camped cellid column in the information table. If the camped cellid corresponding to the second target information does not exist in the camped cellid column in the information table, a target entry needs to be constructed.

For example, if the electronic device enters screen-on from screen-off, the electronic device may obtain the second target information, then compare the second target information with information in the information table, and determine that the camped cellid corresponding to the second target information exists in the camped cellid column in the information table. In this case, the Wi-Fi information needs to be further compared. If the Wi-Fi information does not match, a new entry needs to be constructed. If the Wi-Fi information is the same, the neighboring cellid needs to be further compared. A method for comparing the neighboring cellid is the same as that described above. Details are not described herein again.

For example, a camped cellid obtained by the electronic device is cellidA, obtained neighboring cellids are cellidB and cellidD, and an information table is shown in FIG. 17. In this case, the target entry is entry 1. It is determined, based on the entry 1 and the second target information, that the target neighboring cellid is cellidD, and cellidD is added to a neighboring cellid column of the entry 1. An updated information table is shown in FIG. 18.

The following uses an example in which matching identifier information includes a camped cellid, a neighboring cellid, Wi-Fi information, and a latest valid time, and is stored in a form of an information table to describe an update of the matching identifier information.

When the information table is empty, that is, the information table does not have any records (entries), if a Wi-Fi connection event is received, an electronic device may obtain second target information (the camped cellid, the neighboring cellid, the Wi-Fi information, and the current time), generate a target entry based on the second target information, and correspondingly store the target entry in the information table.

For example, if the electronic device determines to enter a high power consumption state from a low power consumption state, the electronic device may obtain the second target information, and then compare the second target information with information in the information table. The electronic device first checks the camped cellid, that is, to determine whether the camped cellid corresponding to the second target information exists in a camped cellid column in the information table. If the camped cellid corresponding to the second target information does not exist in the camped cellid column in the information table, a target entry needs to be constructed. If it is determined that the camped cellid corresponding to the second target information exists in the camped cellid column in the information table, the Wi-Fi information needs to be further compared. If the Wi-Fi information does not match, a new entry needs to be constructed, or the Wi-Fi information corresponding to the second target information is used to replace the Wi-Fi information in the information table and a latest valid time is updated. If the Wi-Fi information is the same, the neighboring cellid needs to be further compared. Whether the neighboring cellid column corresponding to the target row includes all neighboring cellids corresponding to the first target information is determined. If the neighboring cellid column corresponding to the target row includes all the neighboring cellids corresponding to the first target information, it indicates that in this case, the second target information obtained this time has been recorded in the information table, and only the latest valid time needs to be updated. If it is determined that the neighboring cellid column corresponding to the target row does not include all the neighboring cellids corresponding to the first target information, a target neighboring cellid may be determined and then inserted into the neighboring cellid column corresponding to the target row, or the target entry may be reconstructed. The following uses Example 1 to Example 5 for description.

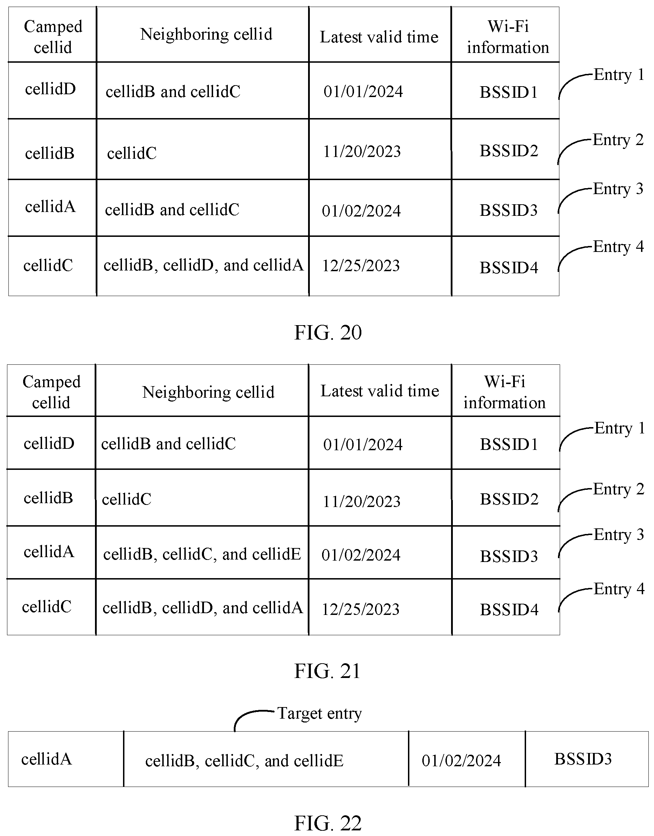

Example 1: An information table stored in an electronic device is shown in FIG. 19. In obtained first target information, a camped cellid is cellidA, neighboring cellids are cellidB and cellidC, Wi-Fi information of connected Wi-Fi is BSSID3, and a latest valid time is 01/02/2024. In this case, it may be determined that a target row is an entry 3, only the latest valid time needs to be updated this time, and an updated information table is shown in FIG. 20.

Example 2: An information table stored in an electronic device is shown in FIG. 19. In obtained first target information, a camped cellid is cellidA, neighboring cellids are cellidB, cellidC, and cellidE, Wi-Fi information of connected Wi-Fi is BSSID3, and a latest valid time is 01/02/2024. It is determined that a target neighboring cellid is cellidE and a target row is an entry 3. In this case, the target neighboring cellid is inserted into a neighboring cellid column in the entry 3, a latest valid time in the entry 3 is updated by using the latest valid time in the first target information, and an updated information table is obtained as shown in FIG. 21.

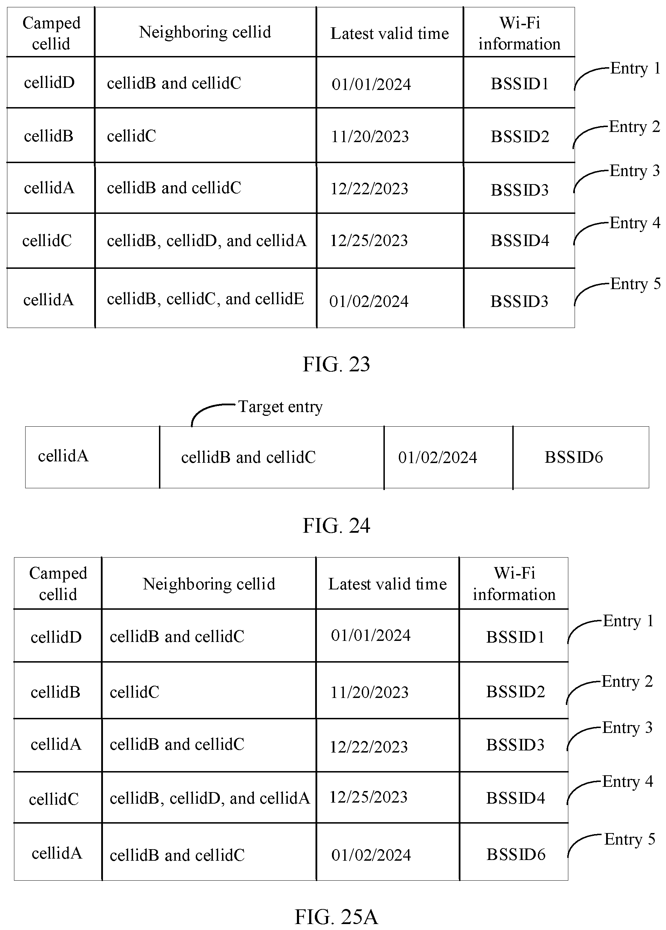

Example 3: An information table stored in an electronic device is shown in FIG. 19. In obtained first target information, a camped cellid is cellidA, neighboring cellids are cellidB, cellidC, and cellidE, Wi-Fi information of connected Wi-Fi is BSSID3, and a latest valid time is 01/02/2024. A generated target entry is shown in FIG. 22, the information table shown in FIG. 19 is updated based on the target entry shown in FIG. 22, and an updated information table is obtained as shown in FIG. 23.

Example 4: An information table stored in an electronic device is shown in FIG. 19. In obtained first target information, a camped cellid is cellidA, neighboring cellids are cellidB and cellidC, Wi-Fi information of connected Wi-Fi is BSSID6, and a latest valid time is 01/02/2024. In this case, a generated target entry is shown in FIG. 24, the information table shown in FIG. 19 is updated based on the target entry shown in FIG. 24, and an updated information table is obtained as shown in FIG. 25A.

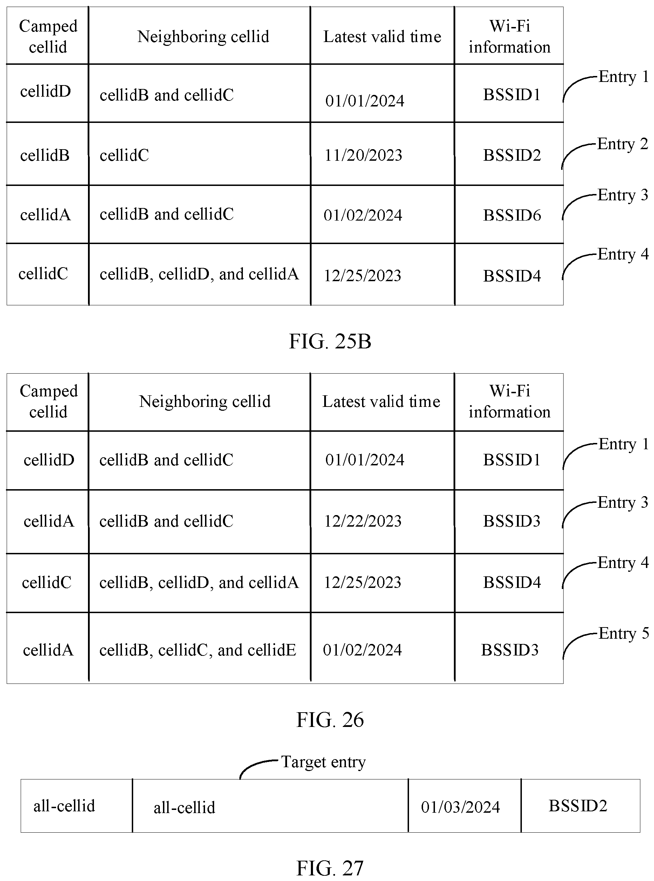

Example 5: An information table stored in an electronic device is shown in FIG. 19. In obtained first target information, a camped cellid is cellidA, neighboring cellids are cellidB and cellidC, Wi-Fi information of connected Wi-Fi is BSSID6, and a latest valid time is 01/02/2024. In this case, BSSID6 is used to replace BSSID3 in the entry 3, and a latest valid time is updated, and an updated information table is obtained as shown in FIG. 25B.

It should be learned that in the foregoing process of obtaining the second target information, the neighboring cellid may not be obtained. In this case, the information table may be updated only based on other obtained second target information.

It should be noted that events that trigger the update of the matching identifier information in the foregoing examples are merely examples, and may be replaced with another event that triggers the update of the matching identifier information. This is not limited in this embodiment of this application.

In some possible embodiments, to avoid a waste of memory resources caused by an entry in an information table that is not used for a long time, in this application, a cleanup period may be set. In each cleanup period, a current time is obtained, a time difference between each latest valid time in a latest valid time column in the information table and the current time is determined, and an entry in which the time difference is greater than a preset time difference value is removed from the information table.

In this application, to avoid that an information table becomes incomplete due to over-cleaning, the preset time difference value cannot be set to an excessively small value. The preset time difference value may be set to one month based on a use habit of a user.

For example, an information table is shown in FIG. 25, a preset time difference value is one month, and an obtained current time is 01/03/2024. It is determined that a latest valid time corresponding to entry 1 is 01/01/2024, and it is determined that a time difference between the entry 1 and the current time is less than the preset time difference value. It is determined that a latest valid time corresponding to entry 2 is 11/20/2023, and it is determined that a time difference between the entry 2 and the current time is greater than the preset time difference value. It is determined that a latest valid time corresponding to the entry 3 is 12/22/2023, and it is determined that a time difference between the entry 3 and the current time is less than the preset time difference value. It is determined that a latest valid time corresponding to an entry 4 is 12/25/2023, and it is determined that a time difference between the entry 4 and the current time is less than the preset time difference value. It is determined that a latest valid time corresponding to an entry 5 is 01/02/2024, and it is determined that a time difference between the entry 5 and the current time is less than the preset time difference value. Therefore, the entry 2 needs to be removed from the information table, and an information table obtained after the removal is shown in FIG. 26.

In some possible embodiments, when an information table is updated by using the foregoing method, the camped cellid and the neighboring cellid in the first target information may not be obtained because a SIM card is not inserted, a SIM card is in arrears, communication is abnormal, or the like. To ensure integrity of the constructed information table, when the camped cellid and the neighboring cellid are not obtained, the information table may be updated based on a preset cellid identifier as the camped cellid and the neighboring cellid.

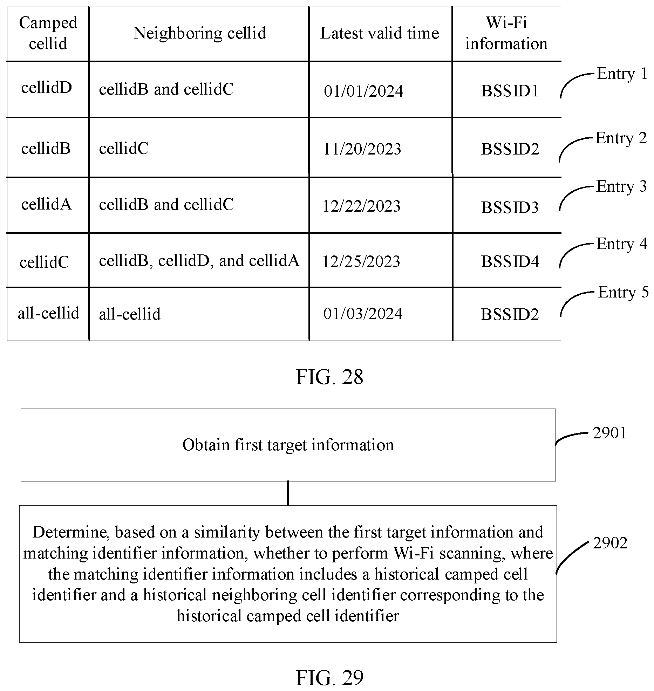

For example, a preset cellid identifier is all-cellid, it is determined that a camped cellid and a neighboring cellid are not obtained this time, obtained Wi-Fi information is BSSID2, and a latest valid time is 01/03/2024. Therefore, the all-cellid may be used as the camped cellid and the neighboring cellid. In this case, a generated target entry is shown in FIG. 27. The information table shown in FIG. 19 is updated by using the target entry shown in FIG. 27, and an updated information table is obtained as shown in FIG. 28.

To ensure accuracy of the information table, after a user inserts a SIM card, the second target information may be obtained again, then the all-cellid in the camped cellid column in the information table is replaced with the second target information, and the all-cellid in the neighboring cellid column is replaced with the second target information.

After the method for updating an information table provided in this embodiment of this application is described, the following describes in detail a wireless fidelity scanning method according to an embodiment of this application.

Because Wi-Fi scanning does not need to be performed when a Wi-Fi connection is established, and a prerequisite for Wi-Fi scanning is that a Wi-Fi function in an electronic device is enabled and Wi-Fi is not connected, the following Wi-Fi scanning methods are all performed in a case in which the Wi-Fi function in the electronic device is enabled and Wi-Fi is not connected.

As shown in FIG. 29, FIG. 29 is a schematic flowchart of a wireless fidelity scanning method according to an embodiment of this application.

Step 2901: Obtain first target information.

In this application, before the first target information, it may be determined, based on the following events or moments, whether timing for performing step 2901 is reached: determining, based on a first period, that a scanning moment is reached; or detecting that screen-off duration reaches a second period, thereby determining that a scanning moment is reached; or detecting that screen-on duration reaches a third period, thereby determining that a scanning moment is reached; or detecting that an electronic device switches from screen-off to screen-on; or detecting that a geofencing function is disabled; or detecting that the electronic device is restarted; or detecting that a wake-up event occurs in the electronic device.

The screen-off duration is duration that starts timing after it is detected that the electronic device enters the screen-off state. When the screen-off duration reaches the second period, if the electronic device is still in the screen-off state, an accumulated duration needs to be reset and timing needs to be restarted, that is, in the screen-off state, a process of performing cyclic timing by using the second period as a cycle and resetting the accumulated duration when the accumulated duration reaches the second period. Similarly, the screen-on duration is duration that starts timing after it is detected that the electronic device enters the screen-on state. When the screen-on duration reaches the third period, if the electronic device is still in the screen-on state, the accumulated duration needs to be reset and timing needs to be restarted, that is, in the screen-on state, a process of performing cyclic timing by using the third period as a cycle and resetting the accumulated duration when the accumulated duration reaches the third period.

In some possible embodiments, the three methods for determining whether the scanning moment is reached, namely "determining, based on the first period, that the scanning moment is reached; detecting that the screen-off duration reaches the second period, thereby determining that the scanning moment is reached; or detecting that the screen-on duration reaches the third period, thereby determining that the scanning moment is reached", may be used at the same time. That is, the electronic device cyclically performs the steps shown in FIG. 29 based on the first period, and at the same time, cyclically performs, in the screen-off state, the steps shown in FIG. 29 based on the second period, and cyclically performs, in the screen-on state, the steps shown in FIG. 29 based on the third period. When the three periods are used at the same time, the steps shown in FIG. 29 need to be performed if it is determined that any of the periods has reached the scanning moment. Because a possibility that a user uses the electronic device in the screen-off state is relatively low, the second period may be set to be longer than the third period.

It should be learned that to ensure accuracy of a determined scanning moment, after it is detected that the geofencing function is disabled, or it is detected that the electronic device is restarted, or it is detected that a wake-up event occurs in the electronic device, that is, after the steps shown in FIG. 29 are performed based on an aperiodic event, start moments of the first period, the second period, and the third period may be updated.

That is, in this application, the steps shown in FIG. 29 may be cyclically performed based on the first period; or the steps shown in FIG. 29 may be cyclically performed based on the second period in the screen-off state of the electronic device, or the steps shown in FIG. 29 may be cyclically performed based on the third period in the screen-on state of the electronic device. It should be learned that the first period, the second period, and the third period may be the same, or may be different.

Step 2902: Determine, based on a similarity between the first target information and matching identifier information, whether to perform Wi-Fi scanning, where the matching identifier information includes a historical camped cell identifier and a historical neighboring cell identifier corresponding to the historical camped cell identifier.

In some embodiments, when whether to perform Wi-Fi scanning is determined based on the similarity between the first target information and the matching identifier information, specifically, it may be determined to perform Wi-Fi scanning when the similarity between the first target information and the matching identifier information is greater than a preset similarity threshold; and it may be determined not to perform Wi-Fi scanning when the similarity between the first target information and the matching identifier information is not greater than the preset similarity threshold.

A specific value of the similarity threshold is not limited in this embodiment of this application.

The following describes an example of implementation of a method for determining a similarity between first target information and matching identifier information.

In an embodiment, when the similarity between the first target information and the matching identifier information is determined, it may be specifically determined whether a camped cellid in the matching identifier information includes a camped cellid in the first target information. If the camped cellid in the matching identifier information includes the camped cellid in the first target information, the similarity between the first target information and the matching identifier information is determined as a first preset value. If the camped cellid in the matching identifier information does not include the camped cellid in the first target information, the similarity between the first target information and the matching identifier information is determined as a second preset value.

The first preset value may be greater than the preset similarity threshold, and the second preset value may be less than the preset similarity threshold. That is, in this embodiment, if the camped cellid in the first target information is detected among the camped cellids in the matching identifier information, it is determined that the similarity between the first target information and the matching identifier information is greater than the preset similarity threshold.

Optionally, when the matching identifier information is stored in a form of an information table, it may be determined whether the camped cellid in the first target information exists in a camped cellid column in the information table. If the camped cellid in the first target information exists in the camped cellid column in the information table, it is determined that the similarity between the first target information and the matching identifier information is the first preset value. If the camped cellid in the first target information does not exist in the camped cellid column in the information table, it is determined that the similarity between the first target information and the matching identifier information is the second preset value.

For example, if the camped cellid in the first target information is cellidA, the information table is shown in FIG. 28, and a camped cellid column in the information table includes cellidA. In this case, it may be determined that the similarity value between the first target information and the information table is the first preset value. Because the first preset value is greater than the preset similarity threshold, in this step, it may be determined to perform Wi-Fi scanning.

It should be noted that this embodiment is applicable to a case in which the matching identifier information includes the camped cellid and the neighboring cellid in the foregoing description. Whether the matching identifier information includes Wi-Fi information and/or a latest valid time is not limited in this embodiment. In other words, provided that the matching identifier information includes the camped cellid and the neighboring cellid, the matching identifier information may include the Wi-Fi information and/or the latest valid time, or may not include the Wi-Fi information or the latest valid time.

In a second embodiment, when the similarity between one piece of target information and the matching identifier information is determined, it may be specifically determined whether the camped cellid or any one of the neighboring cellids in the first target information exists in the matching identifier information. If the camped cellid or any one of the neighboring cellids in the first target information exists in the matching identifier information, it is determined that the similarity between the first target information and the matching identifier information is the first preset value. If neither the camped cellid nor any one of the neighboring cellids in the first target information exists in the matching identifier information, it is determined that the similarity between the first target information and the matching identifier information is a second preset value.

The first preset value may be greater than the preset similarity threshold, and the second preset value may be less than the preset similarity threshold. To be specific, in this embodiment, if the camped cellid or any one of the neighboring cellids in the first target information is detected among the camped cellids and the neighboring cellids in the matching identifier information, it is determined that the similarity between the first target information and the matching identifier information is greater than the preset similarity threshold.

The following three possible implementations use an example to describe an implementation of determining whether the camped cellid or any one of the neighboring cellids in the first target information exists in the matching identifier information.

Implementation I: A camped cellid in first target information is detected among camped cellids in matching identifier information, and/or any one of neighboring cellids in the first target information is detected among neighboring cellids in the matching identifier information.

Optionally, when the matching identifier information is stored in a form of an information table, it may be determined whether the camped cellid in the first target information exists in a camped cellid column in the information table, and whether any one of the neighboring cellids in the first target information exists in a neighboring cellid column in the information table. If the camped cellid in the first target information exists in the camped cellid column and/or any one of the neighboring cellids in the first target information exists in the neighboring cellid column in the information table, it is determined that a similarity between the first target information and the matching identifier information is a first preset value. Otherwise, it is determined that a similarity between the first target information and the matching identifier information is a second preset value.

For example, it is assumed that the camped cellid in the first target information is cellidE, and the neighboring cellid includes cellidA, the information table is shown in FIG. 28, and cellidA (the neighboring cellid) in the first target information is included in a neighboring cellid column corresponding to the entry 4 in the information table. Therefore, it may be determined that a similarity value between the first target information and the information table is the first preset value. Because the first preset value is greater than a preset similarity threshold, in this step, it may be determined to perform Wi-Fi scanning.

Implementation II: A camped cellid or any one of neighboring cellids in first target information is detected among camped cellids and neighboring cellids in matching identifier information.

Optionally, when the matching identifier information is stored in a form of an information table, it may be determined whether at least one cellid (the camped cellid or any one of the neighboring cellids) in the first target information exists in a camped cellid column or a neighboring cellid column in the information table. If the at least one cellid in the first target information exists in the camped cellid column or the neighboring cellid column in the information table, it is determined that a similarity between the first target information and the matching identifier information is a first preset value. If the at least one cellid in the first target information does not exist in the camped cellid column or the neighboring cellid column in the information table, it is determined that a similarity between the first target information and the matching identifier information is a second preset value.

For example, the camped cellid in obtained first target information is cellidE, and the neighboring cellid includes cellidA, the information table is shown in FIG. 28, and cellidA in the neighboring cellid in the first target information is included in a neighboring cellid corresponding to the entry 4 in the information table. Therefore, it may be determined that a similarity value between the first target information and the information table is the first preset value and is greater than a preset similarity threshold, and Wi-Fi scanning needs to be performed.

It should be noted that this embodiment is applicable to a case in which the matching identifier information includes the camped cellid and the neighboring cellid in the foregoing description. Whether the matching identifier information includes Wi-Fi information and/or a latest valid time is not limited in this embodiment. In other words, provided that the matching identifier information includes the camped cellid and the neighboring cellid, the matching identifier information may include the Wi-Fi information and/or the latest valid time, or may not include the Wi-Fi information or the latest valid time.

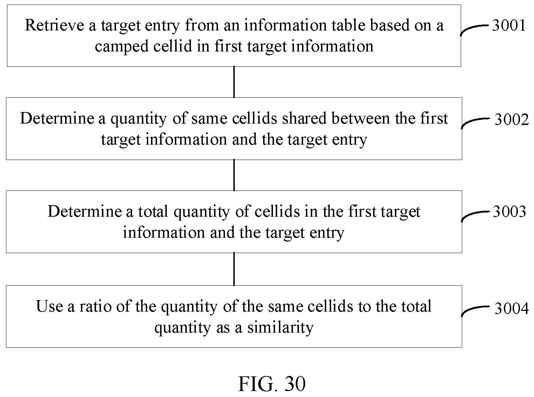

In a third embodiment, a method for calculating a similarity may be further implemented as steps shown in FIG. 30.

Step 3001: Retrieve a target entry from an information table based on a camped cellid in first target information.

In this application, an entry in the information table corresponding to the camped cellid in the first target information is used as the target entry.

For example, the camped cellid in obtained first target information is cellidA, the information table is shown in FIG. 16, a detection is performed in a camped cellid column based on cellidA, and it is determined that the camped cellid in a third row, namely the entry 3, is cellidA. Therefore, the entry 3 is used as the target entry.

Step 3002: Determine a quantity of same cellids shared between the first target information and the target entry.

For example, the camped cellid in the obtained first target information is cellidA, a neighboring cellid includes cellidB and cellidD, the information table is shown in FIG. 28, the entry 3 is the target entry, and the neighboring cellid corresponding to the target entry includes cellidB and cellidC. In this case, it may be determined that the same cellids shared between the first target information and the target entry include cellidA and cellidB. Therefore, it may be determined that the quantity of the same cellids shared between the first target information and the target entry is 2.

Step 3003: Determine a total quantity of cellids in the first target information and the target entry.

In this application, the total quantity of cellids in the first target information and the target entry may be a total quantity of the camped cellids and the neighboring cellids, or may be a total quantity of the neighboring cellids in the first target information and the target entry. This is not limited in this application.

For example, the camped cellid in the obtained first target information is cellidA, and the neighboring cellid includes cellidB and cellidD, the information table is shown in FIG. 28, the entry 3 is the target entry, and the neighboring cellid corresponding to the target entry includes cellidB and cellidC. In this case, it may be determined that the total quantity of cellids in the first target information and the target entry is 6.

For example, if the camped cellid in the obtained first target information is cellidA, and the neighboring cellid includes cellidB and cellidD, the information table is shown in FIG. 28, the entry 3 is the target entry, and the neighboring cellid corresponding to the target entry includes cellidB and cellidC. In this case, it may be determined that the total quantity of the neighboring cellids in the first target information and the target entry is 4.

Step 3004: Use a ratio of the quantity of the same cellids to the total quantity as a similarity.

For example, in the obtained first target information, the camped cellid is cellidA, the neighboring cellid includes cellidB and cellidD, the information table is shown in FIG. 28, and the entry 3 is the target entry. The neighboring cellid corresponding to the target entry includes cellidB and cellidC. The quantity of the same cellids shared between the first target information and the target entry is 2. It is determined that the total quantity of cellids in the first target information and the target entry is 6. Therefore, it may be determined that the similarity value is 2/6=0.33.

For example, in the obtained first target information, the camped cellid is cellidA, the neighboring cellid includes cellidB and cellidD, the information table is shown in FIG. 28, and the entry 3 is the target entry. The neighboring cellid corresponding to the target entry includes cellidB and cellidC. The quantity of the same cellids shared between the first target information and the target entry is 2. It is determined that the total quantity of the neighboring cellids in the first target information and the target entry is 4. Therefore, it may be determined that the similarity value is 2/4=0.5.

In this application, a person skilled in the art may set the preset similarity threshold based on an empirical value. A specific value of the preset similarity threshold is not limited in this application.

It should be learned that the foregoing three methods for determining the similarity between the first target information and the matching identifier information provided in this application are merely three embodiments, and are not intended to limit a specific implementation method for determining the similarity between the first target information and the matching identifier information. Other methods for determining the similarity between the first target information and the matching identifier information are also applicable to this application.

In some possible embodiments, that the Wi-Fi scanning last performed by the electronic device was unsuccessful may be because the electronic device is not located within a Wi-Fi coverage area. In this case, Wi-Fi scanning cannot succeed no matter how many times Wi-Fi scanning is performed. To avoid a waste of resources caused by repeated scanning, before the steps shown in FIG. 29 are implemented, it needs to be first determined that a distance between first location information and obtained current location information is greater than a preset distance. If a Wi-Fi connection is successful after the last Wi-Fi scanning, the first location information is a location at which the Wi-Fi connection is disconnected. If a Wi-Fi connection is not successfully established after the last Wi-Fi scanning, the first location information is information of a location at which Wi-Fi scanning was last performed. If it is determined that the distance between the first location information and the obtained current location information is less than the preset distance, the steps shown in FIG. 29 do not need to be performed.

For example, the first location information obtained when Wi-Fi scanning was last performed is school, and the current location information is home. It is determined that a distance between the school and the home is 500 meters, and a preset distance is 10 meters. In this case, it is determined that the distance between the first location information and the current location information is greater than the preset distance. Accordingly, the steps shown in FIG. 29 may be performed to determine whether Wi-Fi scanning needs to be performed.

In some other possible embodiments, the electronic device may frequently receive a wake-up event. If the steps shown in FIG. 29 are triggered each time the wake-up event is received, excessive resources are consumed. Therefore, after it is detected that a wake-up event occurs in the electronic device and before the steps shown in FIG. 29 are performed, it needs to be determined that a time interval between a first wake-up time and a current wake-up time is longer than a preset time interval. If a Wi-Fi connection is not successfully established after the last wake-up event, the first wake-up time is a time corresponding to the last wake-up event. If a Wi-Fi connection is successfully established after the last wake-up event, step 2901 is directly performed after a current wake-up event occurs.

For example, it is determined that the first wake-up time corresponding to the last wake-up event is 10:00, obtained current wake-up time of the wake-up event is 10:03, and it is determined that the time interval between the first wake-up time and the current wake-up time is 3 minutes. If the preset time interval is 5 minutes, it is determined that the time interval between the first wake-up time and the current wake-up time is less than the preset time interval. In this case, the steps shown in FIG. 29 do not need to be performed.

In some possible embodiments, there are two triggering manners for the electronic device to enter screen-on from screen-off. One is manually triggered by a user, and the other is caused when the electronic device displays a received message or notification (that is, passive triggering). In a passive triggering case, it may indicate that a user does not need to connect to Wi-Fi, and Wi-Fi scanning does not need to be performed. Therefore, after it is detected that the electronic device switches from screen-off to screen-on, and before the steps shown in FIG. 29 are performed, it needs to be determined whether a target operation triggered by a user is received. If the target operation is received, step 2901 is performed. If the target operation is not received, step 2901 does not need to be performed.

That is, in this application, after a screen-on event is detected, whether a user has a Wi-Fi connection requirement is determined by determining whether a target operation triggered by the user is received. By using this method, it is ensured that Wi-Fi scanning can be performed in a timely manner when a user has a Wi-Fi connection requirement, and a waste of resources caused by repeated scanning is avoided.

It should be learned that the target operation in this application includes but is not limited to tapping, double-tapping, triple-tapping, touching, swiping, pressing, and the like. That is, a specific implementation of the target operation is not limited in this application. An operation triggered by a user may be considered as a target operation in this application.

In this application, Wi-Fi scanning is triggered only when a scanning condition is met. By using this method, a hit rate of Wi-Fi scanning is increased, performance experience of a product is improved, and power consumption incurred by unnecessary Wi-Fi scanning is reduced.

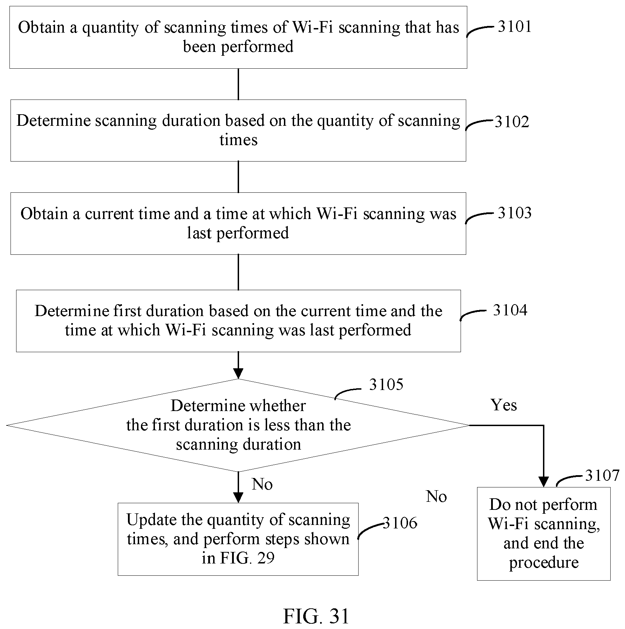

To further reduce power consumption, before Wi-Fi scanning is performed, whether Wi-Fi scanning needs to be performed may be determined by using steps shown in FIG. 31.

Step 3101: Obtain a quantity of scanning times of Wi-Fi scanning that has been performed.

In this application, the quantity of scanning times is a quantity of times of performing Wi-Fi scanning before the steps shown in FIG. 31 are performed this time.

For example, a time at which this procedure is executed this time is 8:00. If it is determined before 8:00 that Wi-Fi scanning has not been successfully performed, it may be determined that a quantity of successful times is 0.

Step 3102: Determine scanning duration based on the quantity of scanning times.

To make the Wi-Fi scanning method provided in this application more universal, the scanning duration in this application may be set to a fixed value, or may be set to a function associated with the quantity of scanning times.

If the scanning duration is a fixed value, a manner of triggering step 2901 is fixed periodic triggering. If the scanning duration is not a fixed value, it indicates that a manner of triggering step 2901 is non-fixed periodic triggering.

For example, if it is determined that the scanning duration is a fixed value of 30 minutes, a determined scanning duration is 30 minutes regardless of a value of the quantity of scanning times.

For another example, a function corresponding to the quantity of scanning times and the scanning duration is T=30x, where T is the scanning duration, and x is the quantity of scanning times. It is assumed that it is determined that the quantity of scanning times is 0, T is 0 minutes; if it is determined that the quantity of scanning times is 1, T is 30 minutes; or if the quantity of scanning times is 2, T is 60 minutes.

It should be learned that successful Wi-Fi scanning does not mean that Wi-Fi can be successfully connected. Therefore, after the last Wi-Fi scanning, a scanning period may be appropriately extended to reduce power consumption.

Step 3103: Obtain a current time and a time at which Wi-Fi scanning was last performed.

In this application, the current time is a time at which this procedure is executed this time.

Step 3104: Determine first duration based on the current time and the time at which Wi-Fi scanning was last performed.

For example, if the obtained current time is 8:00, and the time at which Wi-Fi scanning was last performed is 7:30, it may be determined that the first duration is 30 minutes.

Step 3105: Determine whether the first duration is less than the scanning duration. If the first duration is not less than the scanning duration, perform step 3106. If the first duration is less than the scanning duration, perform step 3107.

For example, the function corresponding to the quantity of scanning times and the scanning duration is T=30x, where T is the scanning duration, and x is the quantity of scanning times. It is determined that the quantity of scanning times is 0, the obtained scanning duration is 0 minutes, the obtained current time is 8:00, the time at which Wi-Fi scanning was last performed is 7:30, and it is determined that the first duration is 30 minutes. It may be determined that the first duration is not less than the scanning duration.

Step 3106: Update the quantity of scanning times, and perform the steps shown in FIG. 29.

If Wi-Fi scanning is successfully performed this time, to ensure that an accurate quantity of scanning times can be obtained when this procedure is executed next time, the quantity of scanning times needs to be updated.

Step 3107: Do not perform Wi-Fi scanning, and end the procedure.

In some possible embodiments, a method of adding one may be used for updating a quantity of scanning times, that is, a current quantity of scanning times is obtained by adding one to a quantity of scanning times obtained last time.

It should be learned that the method for updating the quantity of scanning times provided in this application is merely an embodiment, and is not intended to limit the method for updating the quantity of scanning times. During a specific implementation, the current quantity of scanning times may be obtained by adding two to the quantity of scanning times obtained last time. This is not limited in this application.

In some possible embodiments, when a SIM card is not inserted or a SIM card is in arrears, first target information cannot be obtained, and in this case, a mobile network cannot be used. In addition, when communication of an electronic device is abnormal, although the mobile network may still be used, the first target information cannot be obtained. Therefore, to enable a Wi-Fi connection in a timely manner for a user to use the network, and to avoid consumption of mobile network resources caused by using the mobile network, Wi-Fi scanning may be directly performed when it is determined that the first target information cannot be obtained.

In some possible embodiments, after the steps shown in FIG. 29 are implemented, if it is determined that Wi-Fi scanning needs to be performed, Wi-Fi scanning starts. In this application, when Wi-Fi scanning is performed, either a full scanning method or a targeted scanning method may be used.

In the full scanning method, the electronic device directly scans all possible Wi-Fi to select one target Wi-Fi for connection. The target Wi-Fi may be Wi-Fi with a strongest signal among all the scanned Wi-Fi, or may be Wi-Fi with a last connection time closest to a current time among all the Wi-Fi.

In the targeted scanning method, the electronic device determines a target entry in an information table based on the first target information, and scans Wi-Fi corresponding to Wi-Fi information in a target row. To ensure a success rate of Wi-Fi connection, the full scanning is performed again when the connection is not successfully established.

In some possible embodiments, after step 3001 is implemented, a plurality of target entries may be determined. In this case, for each target entry, the method in step 3002 to step 3004 may be continued to be implemented to determine a similarity. In this case, a similarity between a plurality of target entries and the first target information may be greater than a preset similarity threshold. In this case, a time difference between a latest valid time and a current time may be determined, and Wi-Fi corresponding to the Wi-Fi information in the target entry with a minimum time difference is scanned. If scanning fails, corresponding Wi-Fi is scanned in ascending order of time differences. If none of Wi-Fi corresponding to the Wi-Fi information in all the target entries is successfully connected, full scanning is performed again.

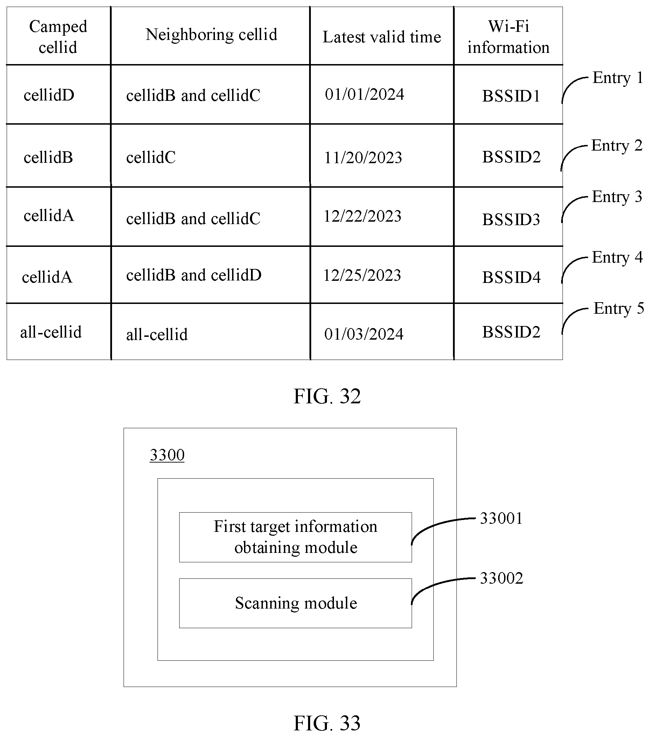

For example, as shown in FIG. 32, it is determined that the target entries are the entry 3 and the entry 4, and the current time is 12/26/2023. In this case, it is determined that Wi-Fi corresponding to BSSID4 in the entry 4 should be scanned first. If the connection is not successfully established, Wi-Fi corresponding to BSSID3 in the entry 3 is then scanned. If the connection is still not successfully established, full scanning is performed again.

Based on a same inventive concept, after the wireless fidelity scanning method provided in embodiments of this application is described, as shown in FIG. 33, the following describes a wireless fidelity scanning apparatus 3300 provided in this embodiment of this application. The apparatus includes:
a first target information obtaining module 33001, configured to obtain first target information, where the first target information includes a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and
a scanning module 33002, configured to determine, based on a similarity between the first target information and matching identifier information, whether to perform Wi-Fi scanning, where the matching identifier information includes a historical camped cell identifier and a historical neighboring cell identifier, the historical camped cell identifier is a cell identifier of a camped cell to which the electronic device was previously connected, and the historical neighboring cell identifier is a cell identifier of a neighboring cell corresponding to the camped cell to which the electronic device was previously connected.

In some possible embodiments, the first target information obtaining module 33001 is specifically configured to: obtain the first target information in response to detecting that a first period is reached; or obtain the first target information in response to detecting that screen-off duration reaches a second period; or obtain the first target information in response to detecting that screen-on duration reaches a third period; or obtain the first target information in response to detecting that the electronic device switches from screen-off to screen-on; or obtain the first target information in response to detecting that a geofencing function is disabled; or obtain the first target information in response to detecting that the electronic device is restarted; or obtain the first target information in response to detecting that a wake-up event occurs in the electronic device.

In some possible embodiments, before obtaining the first target information, the first target information obtaining module 33001 is further configured to determine that a distance between a location of the electronic device and a first location is greater than a preset distance, where the first location is a location at which the electronic device last performed Wi-Fi scanning.

In some possible embodiments, after detecting that the wake-up event occurs in the electronic device, the first target information obtaining module 33001 is further configured to determine that a time interval between a time at which the wake-up event occurs and a first wake-up time is longer than a preset time interval, where the first wake-up time is a time at which a wake-up event last occurred in the electronic device.

In some possible embodiments, the first target information obtaining module 33001 is configured to obtain the first target information in response to switching from screen-off to screen-on caused by a user operation.

In some possible embodiments, the scanning module 33002 is specifically configured to: if the matching identifier information includes the camped cell identifier in the first target information, determine that the similarity is a first preset value; or if the matching identifier information does not include the camped cell identifier in the first target information, determine that the similarity is a second preset value, where the first preset value is greater than a preset similarity threshold, and the second preset value is less than the preset similarity threshold.

In some possible embodiments, the scanning module 33002 is specifically configured to: if the matching identifier information includes any one of the camped cell identifier or the neighboring cell identifier in the first target information, determine that the similarity is a first preset value; or if the matching identifier information does not include the camped cell identifier and the neighboring cell identifier in the first target information, determine that the similarity is a second preset value, where the first preset value is greater than a preset similarity threshold, and the second preset value is less than the preset similarity threshold.

In some possible embodiments, the scanning module 33002 is specifically configured to: retrieve a target entry from the matching identifier information based on the camped cell identifier, where the matching identifier information includes at least one entry, and each entry includes a camped cell identifier and at least one neighboring cell identifier; determine a quantity of same cell identifiers shared between the first target information and the target entry; determine a total quantity of cell identifiers in the first target information and the target entry; and use a ratio of the quantity of the same cell identifiers to the total quantity as the similarity.

In some possible embodiments, after determining, based on the similarity between the first target information and the matching identifier information, whether to perform Wi-Fi scanning, the scanning module 33002 is further configured to: when determining, based on the similarity between the first target information and the matching identifier information, to perform Wi-Fi scanning, determine target Wi-Fi information corresponding to the first target information in the matching identifier information; and connect to Wi-Fi corresponding to the target Wi-Fi information.

In some possible embodiments, before determining, based on the similarity between the first target information and the matching identifier information, to perform Wi-Fi scanning, the scanning module 33002 is further configured to: obtain a quantity of scanning times of Wi-Fi scanning that has been performed, and obtain scanning duration; obtain a current time and a time at which Wi-Fi scanning was last performed; determine first duration based on the current time and the time at which Wi-Fi scanning was last performed; and determine that the first duration is not less than the scanning duration.

In some possible embodiments, after determining that the first duration is not less than the scanning duration, the scanning module 33002 is further configured to update the quantity of scanning times.

In some possible embodiments, the scanning module 33002 is specifically configured to: obtain preset scanning duration; or obtain scanning duration determined based on the quantity of scanning times.

In some possible embodiments, the scanning module 33002 is further configured to: when the first target information is not obtained, perform Wi-Fi scanning.

In some possible embodiments, the scanning module 33002 is further configured to: when the electronic device is in a Wi-Fi connected state, obtain second target information, where the second target information includes a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and update the matching identifier information based on the second target information.

In some possible embodiments, before updating the matching identifier information based on the second target information, the scanning module 33002 is further configured to: determine whether the camped cell identifier in the second target information exists in the camped cell identifier in the matching identifier information; and the updating the matching identifier information based on the second target information includes: if the camped cell identifier in the second target information does not exist in the camped cell identifier in the matching identifier information, updating the matching identifier information based on the second target information.

In some possible embodiments, the scanning module 33002 is further configured to: if the camped cell identifier in the second target information exists in the camped cell identifier in the matching identifier information, determine whether the neighboring cell identifier in the second target information is included in a neighboring cell identifier corresponding to a target row, where the target row is a row in the matching identifier information that is the same as the camped cell identifier in the second target information. If the neighboring cell identifier in the second target information is not included in the neighboring cell identifier corresponding to the target row, update the matching identifier information based on the second target information, or update the matching identifier information based on a target neighboring cell identifier, where the target neighboring cell identifier is a neighboring cell identifier that is in the second target information and that is not included in the neighboring cell identifier corresponding to the target row.

In some possible embodiments, when updating the matching identifier information based on the target neighboring cell identifier, the scanning module 33002 is specifically configured to: if the neighboring cell identifier in the second target information is included in the neighboring cell identifier corresponding to the target row, determine whether Wi-Fi information corresponding to the camped cell identifier in Wi-Fi information in the matching identifier information is the same as obtained Wi-Fi information. If the Wi-Fi information corresponding to the camped cell identifier in the Wi-Fi information in the matching identifier information is different from the obtained Wi-Fi information, update the matching identifier information based on the second target information.

In some possible embodiments, the scanning module 33002 is further configured to: if the Wi-Fi information corresponding to the camped cell identifier in the Wi-Fi information in the matching identifier information is the same as the obtained Wi-Fi information, obtain a current time, and update, by using the current time, a latest valid time corresponding to the camped cell identifier stored in the matching identifier information.

In some possible embodiments, the scanning module 33002 is specifically configured to: construct a target entry based on the second target information; and insert the target entry into the matching identifier information.

In some possible embodiments, the matching identifier information includes at least one entry, and each entry includes the latest valid time. The scanning module 33002 is further configured to: obtain the current time, and obtain each latest valid time in the matching identifier information; determine a time difference between each latest valid time and the current time; and remove, from the matching identifier information, an entry that corresponds to a latest valid time having a time difference greater than a preset time difference value.

In some possible embodiments, if it is determined that the electronic device is in the Wi-Fi connected state, after a first target event is detected, the scanning module 33002 is further configured to: if the second target information is not obtained, update the matching identifier information based on preset target information and obtained Wi-Fi information.

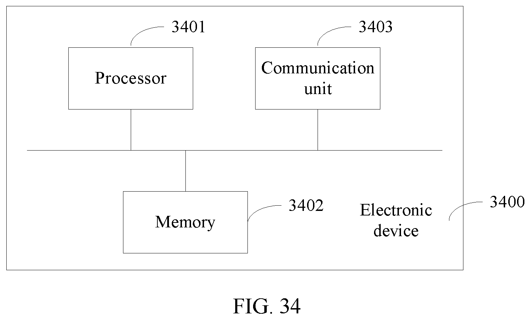

In correspondence to the foregoing embodiments, this application further provides an electronic device. FIG. 34 is a diagram of a structure of an electronic device according to an embodiment of the present invention. The electronic device 3400 may include a processor 3401, a memory 3402, and a communication unit 3403. These components communicate with each other through one or more buses. A person skilled in the art may understand that a structure of the electronic device shown in the figure does not constitute a limitation on embodiments of the present invention. The structure may be a bus structure, or may be a star structure, or may further include more or fewer components than those shown in the figure, or combine some components, or have different component arrangements.

The communication unit 3403 is configured to: establish a communication channel, so that the electronic device can communicate with another device; and receive user data sent by the another device or send user data to the another device.

The processor 3401 is a control center of the electronic device, connects to various parts of the entire electronic device through various interfaces and lines, and performs various functions of the electronic device and/or data processing by running or executing a software program and/or a module stored in the memory 3402 and invoking data stored in the memory. The processor may include an integrated circuit (integrated circuit, IC), for example, may include a single packaged IC, or may include a plurality of connected packaged ICs with a same function or different functions. For example, the processor 3401 may include only a central processing unit (central processing unit, CPU). In this implementation of the present invention, the CPU may be a single computing core, or may include a plurality of computing cores.

The memory 3402 is configured to store execution instructions of the processor 3401. The memory 3402 may be implemented by any type of a volatile or nonvolatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

When the execution instructions in the memory 3402 are executed by the processor 3401, the electronic device 3400 is enabled to perform some or all of the steps in the embodiment shown in FIG. 3.

In a specific implementation, the present invention further provides a computer storage medium, where the computer storage medium may store a program, and, when the program is executed, a part or all of the steps of embodiments of the calling method provided in the present invention may be performed. The storage medium may be a magnetic disk, an optical disc, a read-only memory (read-only memory, ROM), a random access memory (random access memory, RAM), or the like.

A person skilled in the art may clearly understand that, the technologies in embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in embodiments or some parts of embodiments of the present invention.

Same or similar parts of the embodiments of this specification may be referred to each other. Especially, apparatus and terminal embodiments are basically similar to a method embodiment, and therefore are described briefly. For related parts, refer to the description in the method embodiment.

## Claims

1. A wireless fidelity Wi-Fi scanning method, applied to an electronic device, wherein the method comprises:
obtaining first target information, wherein the first target information comprises a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and
determining, based on a similarity between the first target information and matching identifier information, whether to perform Wi-Fi scanning, wherein the matching identifier information comprises a historical camped cell identifier and a historical neighboring cell identifier, the historical camped cell identifier is a cell identifier of a camped cell to which the electronic device was previously connected, and the historical neighboring cell identifier is a cell identifier of a neighboring cell corresponding to the camped cell to which the electronic device was previously connected.

2. The method according to claim 1, wherein the obtaining the first target information comprises:
obtaining the first target information in response to detecting that a first period is reached; or
obtaining the first target information in response to detecting that screen-off duration reaches a second period; or
obtaining the first target information in response to detecting that screen-on duration reaches a third period; or
obtaining the first target information in response to detecting that the electronic device switches from screen-off to screen-on; or
obtaining the first target information in response to detecting that a geofencing function is disabled; or
obtaining the first target information in response to detecting that the electronic device is restarted; or
obtaining the first target information in response to detecting that a wake-up event occurs in the electronic device.

3. The method according to claim 2, wherein before the obtaining the first target information, the method further comprises:
determining that a distance between a location of the electronic device and a first location is greater than a preset distance, wherein the first location is a location at which the electronic device last performed Wi-Fi scanning.

4. The method according to claim 2, wherein after it is detected that a wake-up event occurs in the electronic device, before the first target information is obtained, the method further comprises:
determining that a time interval between a time at which the wake-up event occurs and a first wake-up time is longer than a preset time interval, wherein the first wake-up time is a time at which a wake-up event last occurred in the electronic device.

5. The method according to claim 2, wherein the obtaining the first target information comprises:
obtaining the first target information in response to switching from screen-off to screen-on caused by a user operation.

6. The method according to claim 1, wherein the similarity between the first target information and the matching identifier information is determined by using the following method:
if the matching identifier information comprises the camped cell identifier in the first target information, determining that the similarity is a first preset value; or
if the matching identifier information does not comprise the camped cell identifier in the first target information, determining that the similarity is a second preset value, wherein
the first preset value is greater than a preset similarity threshold, and the second preset value is less than the preset similarity threshold.

7. The method according to claim 1, wherein the similarity between the first target information and the matching identifier information is determined by using the following method:
if the matching identifier information comprises any one of the camped cell identifier or the neighboring cell identifier in the first target information, determining that the similarity is a first preset value; or
if the matching identifier information does not comprise the camped cell identifier and the neighboring cell identifier in the first target information, determining that the similarity is a second preset value, wherein
the first preset value is greater than the preset similarity threshold, and the second preset value is less than the preset similarity threshold.

8. The method according to claim 1, wherein the similarity between the first target information and the matching identifier information is determined by using the following method:
retrieving a target entry from the matching identifier information based on the camped cell identifier, wherein the matching identifier information comprises at least one entry, and each entry comprises a camped cell identifier and at least one neighboring cell identifier;
determining a quantity of same cell identifiers shared between the first target information and the target entry;
determining a total quantity of cell identifiers in the first target information and the target entry; and
using a ratio of the quantity of the same cell identifiers to the total quantity as the similarity.

9. The method according to claim 1, wherein after the determining, based on the similarity between the first target information and the matching identifier information, whether to perform Wi-Fi scanning, the method further comprises:
when determining, based on the similarity between the first target information and the matching identifier information, to perform Wi-Fi scanning, determining target Wi-Fi information corresponding to the first target information in the matching identifier information; and
connecting to Wi-Fi corresponding to the target Wi-Fi information.

10. The method according to claim 1, wherein before the determining, based on the similarity between the first target information and the matching identifier information, to perform Wi-Fi scanning, the method further comprises:
obtaining a quantity of scanning times of Wi-Fi scanning that has been performed, and obtaining scanning duration;
obtaining a current time and a time at which Wi-Fi scanning was last performed;
determining first duration based on the current time and the time at which Wi-Fi scanning was last performed; and
determining that the first duration is not less than the scanning duration.

11. The method according to claim 10, wherein after the determining that the first duration is not less than the scanning duration, the method further comprises:
updating the quantity of scanning times.

12. The method according to claim 10, wherein the obtaining the scanning duration comprises:
obtaining preset scanning duration; or
obtaining scanning duration determined based on the quantity of scanning times.

13. The method according to any one of claims 1 to 12, wherein the method further comprises:
if the first target information is not obtained, performing Wi-Fi scanning.

14. The method according to any one of claims 1 to 12, wherein the method further comprises:
obtaining second target information when the electronic device is in a Wi-Fi connected state, wherein the second target information comprises a camped cell identifier and a neighboring cell identifier, the camped cell identifier is a cell identifier of a camped cell to which the electronic device is connected, and the neighboring cell identifier is a cell identifier of a neighboring cell corresponding to the camped cell; and
updating the matching identifier information based on the second target information.

15. The method according to claim 14, wherein before the updating the matching identifier information based on the second target information, the method further comprises:
determining whether the camped cell identifier in the second target information exists in a camped cell identifier in the matching identifier information; and
the updating the matching identifier information based on the second target information comprises:
if the camped cell identifier in the second target information does not exist in the camped cell identifier in the matching identifier information, updating the matching identifier information based on the second target information.

16. The method according to claim 15, wherein the method further comprises:
if the camped cell identifier in the second target information exists in the camped cell identifier in the matching identifier information, determining whether the neighboring cell identifier in the second target information is comprised in a neighboring cell identifier corresponding to a target row, wherein the target row is a row in the matching identifier information that is the same as the camped cell identifier in the second target information; or
if the neighboring cell identifier in the second target information is not comprised in the neighboring cell identifier corresponding to the target row, updating the matching identifier information based on the second target information, or updating the matching identifier information based on a target neighboring cell identifier, wherein the target neighboring cell identifier is a neighboring cell identifier that is in the second target information and that is not comprised in the neighboring cell identifier corresponding to the target row.

17. The method according to claim 16, wherein the updating the matching identifier information based on the target neighboring cell identifier comprises:
adding the target neighboring cell identifier to the neighboring cell identifier corresponding to the target row.

18. The method according to claim 16, wherein the method further comprises:
if the neighboring cell identifier in the second target information is comprised in the neighboring cell identifier corresponding to the target row, determining whether Wi-Fi information corresponding to the camped cell identifier in Wi-Fi information in the matching identifier information is the same as obtained Wi-Fi information; or
if the Wi-Fi information corresponding to the camped cell identifier in the Wi-Fi information in the matching identifier information is different from the obtained Wi-Fi information, updating the matching identifier information based on the second target information.

19. The method according to claim 18, wherein the method further comprises:
if the Wi-Fi information corresponding to the camped cell identifier in the Wi-Fi information in the matching identifier information is the same as the obtained Wi-Fi information, obtaining a current time, and updating, by using the current time, a latest valid time corresponding to the camped cell identifier stored in the matching identifier information.

20. The method according to any one of claims 15 to 18, wherein the updating the matching identifier information based on the second target information comprises:
constructing a target entry based on the second target information; and
inserting the target entry into the matching identifier information.

21. The method according to claim 14, wherein the matching identifier information comprises at least one entry, each entry comprises a latest valid time, and the method further comprises:
obtaining a current time, and obtaining each latest valid time in the matching identifier information;
determining a time difference between each latest valid time and the current time; and
removing, from the matching identifier information, an entry that corresponds to a latest valid time having a time difference greater than a preset time difference value.

22. The method according to claim 14, wherein if it is determined that the electronic device is in the Wi-Fi connected state, after a first target event is detected, the method further comprises:
if the second target information is not obtained, updating the matching identifier information based on preset target information and obtained Wi-Fi information.

23. An electronic device, comprising a memory configured to store computer program instructions and a processor configured to execute the program instructions, wherein when the computer program instructions are executed by the processor, the electronic device is triggered to perform the method according to any one of claims 1 to 22.

24. A computer-readable storage medium, wherein the computer-readable storage medium comprises a stored program, and when the program runs, a device in which the computer-readable storage medium is located is controlled to perform the method according to any one of claims 1 to 22.
